# EUROPEAN PATENT APPLICATION

(11) **EP 4 391 443 A1**
(43) Date of publication of application: **26.06.2024**
(21) Application number: 22869101.0
(22) Date of filing: 08.09.2022
(51) Int. Cl.: H04L 9/08

(54) **METHOD FOR DETERMINING KEY ACQUISITION MODE, COMMUNICATION METHOD, AND COMMUNICATION APPARATUS**

(30) Priority: 16.09.2021 CN 202111089119
(71) Applicant: Huawei Technologies Co., Ltd., Shenzhen, Guangdong 518129 (CN)
(72) Inventor: LEI, Ao, Shenzhen, Guangdong 518129 (CN); LI, He, Shenzhen, Guangdong 518129 (CN); WU, Yizhuang, Shenzhen, Guangdong 518129 (CN)
(74) Representative: Epping - Hermann - Fischer
(86) International application number: PCT/CN2022/117689
(87) International publication number: WO 2023/040732

(57) **Abstract**

This application provides a method for determining a key obtaining manner, a communication method, and a communication apparatus. The method for determining the key obtaining manner includes: When a preset condition is met, a first terminal device sends a first message to a second terminal device, where the first message includes first indication information, the first indication information indicates to obtain a first PC5 key in a control plane manner, and the first PC5 key is a key used for a PC5 link between the first terminal device and the second terminal device; and the first terminal device receives, from the second terminal device, a response message of the first message, where the response message indicates whether the second terminal device can obtain the first PC5 key. Based on this application, a problem of how to determine a manner of obtaining a PC5 key can be resolved.

## Description

This application claims priority to Chinese Patent Application No. 202111089119.7, filed with the China National Intellectual Property Administration on September 16, 2021 and entitled "METHOD FOR DETERMINING KEY OBTAINING MANNER, COMMUNICATION METHOD, AND COMMUNICATION APPARATUS", which is incorporated herein by reference in its entirety.

### TECHNICAL FIELD

This application relates to the communications field, and more specifically, to a method for determining a key obtaining manner, a communication method, and a communication apparatus.

### BACKGROUND

When user equipment (user equipment, UE) is located outside network coverage or a communication signal between the user equipment and a radio access network (radio access network, RAN) device is poor, remote UE (remote UE) may use relay UE (relay UE) to assist in communication. In other words, the remote UE obtains a service through communication between the remote UE and the relay UE and communication between the relay UE and a mobile network. A communication manner from the remote UE to the relay UE to the network may be referred to as UE-to-network relay (UE-to-network relay) communication.

Before the relay UE serves the remote UE, the remote UE and the relay UE establish a PCS unicast link. In a process of establishing the PCS unicast link, the remote UE and the relay UE may obtain, from a network side in a control plane manner or a user plane manner, a PCS key used for the PCS unicast link. However, currently, a condition based on which the remote UE and the relay UE select whether to obtain the PCS key in the control plane manner or the user plane manner is not defined.

### SUMMARY

This application provides a method for determining a key obtaining manner, to resolve a problem of how to determine a manner of obtaining a PC5 key.

According to a first aspect, a method for determining a key obtaining manner is provided. The method includes: When a preset condition is met, a first terminal device sends a first message to a second terminal device, where the first message includes first indication information, the first indication information indicates to obtain a first PCS key in a control plane manner, and the first PCS key is a key used for a PCS link between the first terminal device and the second terminal device; and the first terminal device receives, from the second terminal device, a response message of the first message, where the response message indicates whether the second terminal device can obtain the first PCS key, where the preset condition includes one or more of the following: a first public land mobile network identifier (public land mobile network identifier, PLMN ID) of a home network of the first terminal device is inconsistent with a second PLMN ID of a home network of the second terminal device, a first relay service code (relay service code, RSC) used by the first terminal device in a proximity direct discovery procedure corresponds to a layer-2 terminal device-to-network relay communication service, a second RSC used by the second terminal device in a proximity direct discovery procedure corresponds to the layer-2 terminal device-to-network relay communication service, key information that is obtained by the first terminal device from a key management function network element and that is for determining the first PCS key expires, and the first terminal device has not obtained the key information.

Based on the foregoing technical solution, the first terminal device determines, based on whether at least one of the preset conditions is met, whether to obtain the first PCS key in the control plane manner, so that the first terminal device and the second terminal device can obtain the first PCS key in different manners in different scenarios, to obtain the PCS key in a manner with lower signaling overheads and fewer wasted resources, to improve efficiency and a success rate of establishing the PCS link.

For example, when the first terminal device and the second terminal device are terminal devices of different public land mobile networks (public land mobile networks, PLMNs), because a remote terminal device in the first terminal device and the second terminal device cannot access an internal network element in another PLMN by using a user plane, when the first PLMN ID is inconsistent with the second PLMN ID, the first terminal device determines to obtain the first PCS key in the control plane manner, and sends the first indication information to the second terminal device, to ensure that the first terminal device and the second terminal device successfully obtain the first PCS key and successfully establish the PCS link.

For another example, in a layer-2 terminal device-to-network relay communication service scenario, a relay terminal device is not responsible for establishing a protocol data unit (protocol data unit, PDU) session for a remote terminal device. If the first PCS key is obtained in a user plane manner, processing burden and processing logic of the relay terminal device are additionally increased. Therefore, when the first RSC or the second RSC corresponds to the layer-2 UE-to-network relay communication service, the first terminal device determines to obtain the first PCS key in the control plane manner, and sends the first indication information to the second terminal device, so that the increase of processing logic and processing burden of the relay terminal device in the first terminal device and the second terminal device can be avoided.

For another example, in the user plane manner, the remote terminal device needs to obtain the key information from the key management network element in advance, and the key information distributed by the key management network element has a corresponding validity period. To be specific, after the key information expires, the remote terminal device cannot obtain the PCS key, or the remote terminal device needs to obtain the key information from the key management network element again. If the remote terminal device is not in network coverage, the remote terminal device cannot obtain the key information from the key management network element. Therefore, when the key information obtained by the first terminal device from the key management network element expires, or the first terminal device has not obtained the key information, the first terminal device determines to obtain the first PCS key in the control plane manner, and sends the first indication information to the second terminal device. This can ensure that the first terminal device and the second terminal device successfully obtain the first PCS key and successfully establish the PCS link.

In a possible implementation, the first terminal device is a remote terminal device, the second terminal device is a relay terminal device, and the preset condition includes one or more of the following: the first PLMN ID is inconsistent with the second PLMN ID, the first RSC corresponds to the layer-2 terminal device-to-network relay communication service, the second RSC corresponds to the layer-2 terminal device-to-network relay communication service, the key information obtained by the first terminal device from the key management function network element expires, and the first terminal device has not obtained the key information.

In another possible implementation, the first terminal device is a relay terminal device, the second terminal device is a remote terminal device, and the preset condition includes one or more of the following: the first PLMN ID is inconsistent with the second PLMN ID, the first RSC corresponds to the layer-2 terminal device-to-network relay communication service, and the second RSC corresponds to the layer-2 terminal device-to-network relay communication service.

With reference to the first aspect, in some possible implementations of the first aspect, the method further includes: The first terminal device receives a third message from the second terminal device, where the third message includes the second PLMN ID and the second RSC.

For example, the key management function network element corresponds to the first PLMN ID or the second PLMN ID, and that the first terminal device has not obtained the key information includes: The first terminal device has not obtained the key information from the key management function network element. In other words, the preset condition includes one or more of the following: The first terminal device has not obtained the key information from the key management network element corresponding to the first PLMN ID or the second PLMN ID, or the key information obtained by the first terminal device from the first PLMN ID or the second PLMN ID expires.

It should be noted that, when the first terminal device determines that the first PCS key can be obtained in the control plane manner and the user plane manner, the first terminal device sends, when the preset condition is met, the first message including the first indication information to the second terminal device.

For example, the method further includes: The first terminal device receives first information, where the first information indicates that the first terminal device can obtain a PCS key in the control plane manner and the user plane manner. Correspondingly, the first terminal device may determine, based on the first information, that the first PCS key can be obtained in the control plane manner and the user plane manner.

For another example, the method further includes: The first terminal device receives first information, where the first information includes a mapping relationship between the first PLMN ID and second indication information or a mapping relationship between the second PLMN ID and second indication information, and the second indication information indicates to obtain a PCS key in the control plane manner and the user plane manner. Correspondingly, the first terminal device may determine, based on the second indication information, that the first PCS key can be obtained in the control plane manner and the user plane manner.

It should be noted that, in addition to the mapping relationship between the first PLMN ID and the second indication information or the mapping relationship between the second PLMN ID and the second indication information, the first information may further include a mapping relationship between a PLMN ID and indication information that indicates a manner of obtaining the PCS key and that is in all PLMNs that have a roaming agreement with a carrier of the home network of the first terminal device.

Optionally, when the second indication information is corresponding to the second PLMN ID, the first PCS key is generated by a network element in the second PLMN; or when the second indication information is corresponding to the first PLMN ID, the first PCS key is generated by a network element in the first PLMN.

For still another example, the method further includes: The first terminal device receives first information, where the first information includes a mapping relationship between identifier information of a relay service corresponding to the PCS link and second indication information, and the second indication information indicates to obtain a PCS key in the control plane manner and the user plane manner. Correspondingly, the first terminal device determines, based on the second indication information, that the first PCS key can be obtained in the control plane manner and the user plane manner. The identifier information of the relay service may be RSC information. It should be noted that, in addition to the mapping relationship between the identifier information of the relay service corresponding to the PCS link and the second indication information, the first information may further include a mapping relationship between relay service identifier information of all relay services that can be used by the first terminal device and corresponding indication information that indicates a manner of obtaining a PCS key. The identifier information of the relay service may be RSC information.

With reference to the first aspect, in some possible implementations of the first aspect, the method further includes: The first terminal device determines the first indication information based on the first information.

According to a second aspect, a method for determining a key obtaining manner is provided. The method includes: A second terminal device receives a first message from a first terminal device, where the first message includes first indication information, the first indication information indicates to obtain a first PCS key in a control plane manner, and the first PCS key is a key used for a PCS link between the first terminal device and the second terminal device; and the second terminal device sends a response message of the first message sent by the first terminal device, where the response message indicates whether the second terminal device can obtain the first PCS key.

Based on the foregoing technical solution, when the first message sent by the first terminal device to the second terminal device includes the first indication information, the second terminal device sends the response message of the first message to the first terminal device, so that the first terminal device can determine, based on the response message, whether the second terminal device can obtain the first PCS key, to ensure successful establishment of the PCS link or reduce signaling. For example, if the response message indicates that the second terminal device can obtain the first PCS key, the first terminal device continues to perform a PCS link establishment procedure with the second terminal device, to ensure that the PCS link is successfully established. For another example, if the response message indicates that the second terminal device cannot obtain the first PCS key, the first terminal device terminates the PCS link establishment procedure with the second terminal device, to reduce signaling.

It should be noted that, if the second terminal device determines that the first PCS key can be obtained in the control plane manner, the response message indicates that the second terminal device can obtain the first PCS key; or if the second terminal device determines that the first PCS key cannot be obtained in the control plane manner, the response message indicates that the second terminal device cannot obtain the first PCS key.

For example, the method further includes: The second terminal device receives second information, where the second information indicates that the second terminal device can obtain a PCS key in the control plane manner and/or a user plane manner. Correspondingly, the second terminal device may determine, based on the second information, that the first PCS key can be obtained in the control plane manner and/or the user plane manner.

For another example, the method further includes: The second terminal device receives second information, where the second information includes a mapping relationship between a first PLMN ID of a home network of the first terminal device and third indication information or a mapping relationship between a second PLMN ID of a home network of the second terminal device and third indication information, and the third indication information indicates to obtain a PCS key in the control plane manner and/or a user plane manner. Correspondingly, the second terminal device may determine, based on the third indication information, that the first PCS key can be obtained in the control plane manner and/or the user plane manner.

It should be noted that, in addition to the mapping relationship between the first PLMN ID and the third indication information or the mapping relationship between the second PLMN ID and the third indication information, the second information may further include a mapping relationship between a PLMN ID and indication information that indicates a manner of obtaining the PCS key and that is in all PLMNs that have a roaming agreement with a carrier of the home network of the second terminal device.

For still another example, the method further includes: The second terminal device receives second information, where the second information includes a mapping relationship between identifier information of a relay service corresponding to the PCS link and third indication information, and the third indication information indicates to obtain a PCS key in the control plane manner and/or a user plane manner. Correspondingly, the second terminal device may determine, based on the third indication information, that the first PCS key can be obtained in the control plane manner and/or the user plane manner.

It should be noted that, in addition to the mapping relationship between the identifier information of the relay service corresponding to the PCS link and the third indication information, the first information may further include a mapping relationship between relay service identifier information of all relay services that can be used by the second terminal device and corresponding indication information that indicates a manner of obtaining a PCS key. The identifier information of the relay service may be RSC information.

According to a third aspect, a communication method is provided. The method may include: A policy control function network element receives, from an access and mobility management function network element, a request message for requesting a proximity service (proximity-based service, ProSe) parameter of a first terminal device; and the policy control function network element sends the ProSe parameter to the first terminal device, where the ProSe parameter includes first information, the first information is for determining a manner of obtaining a first PCS key, the first PCS key is a key used for a PCS link between the first terminal device and a second terminal device, and the manner of obtaining the first PCS key includes a control plane manner and/or a user plane manner.

Based on the foregoing technical solution, the policy control function network element sends the first information to the first terminal device in the ProSe parameter, so that the first terminal device can determine, based on the first information, the manner of obtaining the first PCS key. This helps the first terminal device and the second terminal device successfully establish the PCS link.

For example, the first information indicates to obtain a PCS key in the control plane manner and/or the user plane manner.

For another example, the first information includes a mapping relationship between a first PLMN ID of a home network of the first terminal device and second indication information or a mapping relationship between a second PLMN ID of a home network of the second terminal device and second indication information, and the second indication information indicates to obtain a PCS key in the control plane manner and the user plane manner.

Optionally, when the second indication information is corresponding to the second PLMN ID, the first PCS key is generated by a network element in the second PLMN; or when the second indication information is corresponding to the first PLMN ID, the first PCS key is generated by a network element in the first PLMN.

For still another example, the first information includes a mapping relationship between identifier information of a relay service corresponding to the PCS link and second indication information, and the second indication information indicates to obtain a PCS key in the control plane manner and the user plane manner. The identifier information of the relay service may be RSC information. A manner in which the policy control function network element obtains the first information is not limited in this embodiment of this application.

For example, the policy control function network element obtains the first information from the access and mobility management function network element. In other words, the first request message includes the first information.

For another example, the method further includes: The policy control function network element obtains the first information from local configuration.

For still another example, the policy control function network element obtains the first information from an application function network element. In other words, the method further includes: The policy control function network element receives the first information from an application function network element.

For yet another example, the first network element obtains the first information from a first network element. In other words, the method further includes: The policy control function network element sends, to a first network element, a request message for requesting the first information; and the policy control function network element receives the first information from the first network element. The first network element is a unified data management network element or a direct communication discovery name management network element.

According to a fourth aspect, a communication method is provided. The method includes: An access and mobility management function network element receives subscription data and first information of a first terminal device from a unified data management network element, where the first information is used by the first terminal device to determine a manner of obtaining a first PCS key, the first PCS key is a key used for a PCS link between the first terminal device and a second terminal device, and the manner of obtaining the first PCS key includes a control plane manner and/or a user plane manner; and the access and mobility management function network element sends, to a policy control function network element, a request message for requesting a ProSe parameter of the first terminal device, where the first request message includes the first information.

Based on the foregoing technical solution, the access and mobility management function network element sends the first information to the policy control function network element, so that the policy control function network element can send the first information to the first terminal device in the ProSe parameter, and further, the first terminal device can determine, based on the first information, the manner of obtaining the first PCS key. This helps the first terminal device and the second terminal device successfully establish the PCS link.

For example, the first information indicates to obtain a PCS key in the control plane manner and/or the user plane manner.

For another example, the first information includes a mapping relationship between a first PLMN ID of a home network of the first terminal device and second indication information or a mapping relationship between a second PLMN ID of a home network of the second terminal device and second indication information, and the second indication information indicates to obtain a PCS key in the control plane manner and the user plane manner.

Optionally, when the second indication information is corresponding to the second PLMN ID, the first PCS key is generated by a network element in the second PLMN; or when the second indication information is corresponding to the first PLMN ID, the first PCS key is generated by a network element in the first PLMN.

For still another example, the first information includes a mapping relationship between identifier information of a relay service corresponding to the PCS link and second indication information, and the second indication information indicates to obtain a PCS key in the control plane manner and the user plane manner. The identifier information of the relay service may be RSC information. According to a fifth aspect, a communication apparatus is provided, where the communication apparatus includes a transceiver unit. The transceiver unit is configured to: when a preset condition is met, send a first message to a second terminal device, where the first message includes first indication information, the first indication information indicates to obtain a first PCS key in a control plane manner, and the first PCS key is a key used for a PCS link between a first terminal device and the second terminal device. The transceiver unit is further configured to: receive, from the second terminal device, a response message of the first message, where the response message indicates whether the second terminal device can obtain the first PCS key. The preset condition includes one or more of the following: a first PLMN ID of a home network of the first terminal device is inconsistent with a second PLMN ID of a home network of the second terminal device, a first RSC used by the first terminal device in a proximity direct discovery procedure corresponds to a layer-2 terminal device-to-network relay communication service, a second RSC used by the second terminal device in a proximity direct discovery procedure corresponds to the layer-2 terminal device-to-network relay communication service, key information that is obtained by the first terminal device from a key management function network element and that is for determining the first PCS key expires, and the first terminal device has not obtained the key information. With reference to the fifth aspect, in some implementations of the fifth aspect, the first terminal device is a remote terminal device, the second terminal device is a relay terminal device, and the preset condition includes one or more of the following: the first PLMN ID is inconsistent with the second PLMN ID, the first RSC corresponds to the layer-2 terminal device-to-network relay communication service, the second RSC corresponds to the layer-2 terminal device-to-network relay communication service, the key information obtained by the first terminal device from the key management function network element expires, and the first terminal device has not obtained the key information.

With reference to the fifth aspect, in some implementations of the fifth aspect, the first terminal device is a relay terminal device, the second terminal device is a remote terminal device, and the preset condition includes one or more of the following: the first PLMN ID is inconsistent with the second PLMN ID, the first RSC corresponds to the layer-2 terminal device-to-network relay communication service, and the second RSC corresponds to the layer-2 terminal device-to-network relay communication service.

With reference to the fifth aspect, in some implementations of the fifth aspect, the transceiver unit is further configured to receive a third message from the second terminal device, where the third message includes the second PLMN ID and the second RSC.

With reference to the fifth aspect, in some implementations of the fifth aspect, the key management function network element corresponds to the first PLMN ID or the second PLMN ID, and that the first terminal device has not obtained the key information includes: The first terminal device has not obtained the key information from the key management function network element.

With reference to the fifth aspect, in some implementations of the fifth aspect, the transceiver unit is further configured to receive first information, where the first information indicates that the first terminal device can obtain a PCS key in the control plane manner and a user plane manner.

With reference to the fifth aspect, in some implementations of the fifth aspect, the transceiver unit is further configured to receive first information, where the first information includes a mapping relationship between the first PLMN ID and second indication information or a mapping relationship between the second PLMN ID and second indication information, and the second indication information indicates to obtain a PCS key in the control plane manner and a user plane manner.

With reference to the fifth aspect, in some implementations of the fifth aspect, the transceiver unit is further configured to receive first information, where the first information includes a mapping relationship between identifier information of a relay service corresponding to the PCS link and second indication information, and the second indication information indicates to obtain a PCS key in the control plane manner and a user plane manner.

With reference to the fifth aspect, in some implementations of the fifth aspect, the communication apparatus further includes a processing unit, and the processing unit is configured to determine the first indication information based on the first information.

According to a sixth aspect, a communication apparatus is provided, where the communication apparatus includes a transceiver unit. The transceiver unit is configured to receive a first message from a first terminal device, where the first message includes first indication information, the first indication information indicates to obtain a first PCS key in a control plane manner, and the first PCS key is a key used for a PCS link between the first terminal device and a second terminal device. The transceiver unit is further configured to send a response message of the first message to the first terminal device, where the response message indicates whether the second terminal device can obtain the first PCS key.

With reference to the sixth aspect, in some implementations of the sixth aspect, if the second terminal device can obtain the first PCS key in the control plane manner, the response message indicates that the second terminal device can obtain the first PCS key; or if the second terminal device cannot obtain the first PCS key in the control plane manner, the response message indicates that the second terminal device cannot obtain the first PCS key.

With reference to the sixth aspect, in some implementations of the sixth aspect, the transceiver unit is further configured to receive second information, where the second information indicates that the second terminal device can obtain a PCS key in the control plane manner and/or a user plane manner.

With reference to the sixth aspect, in some implementations of the sixth aspect, the transceiver unit is further configured to receive second information, where the second information includes a mapping relationship between a first PLMN ID of a home network of the first terminal device and third indication information or a mapping relationship between a second PLMN ID of a home network of the second terminal device and third indication information, and the third indication information indicates to obtain a PCS key in the control plane manner and/or a user plane manner. With reference to the sixth aspect, in some implementations of the sixth aspect, the transceiver unit is further configured to receive second information, where the second information includes a mapping relationship between identifier information of a relay service corresponding to the PCS link and third indication information, and the third indication information indicates to obtain a PCS key in the control plane manner and/or a user plane manner.

According to a seventh aspect, a communication apparatus is provided, where the communication apparatus includes a transceiver unit. The transceiver unit is configured to: receive, from an access and mobility management function network element, a request message for requesting a ProSe parameter of a first terminal device. The transceiver unit is further configured to send the ProSe parameter to the first terminal device, where the ProSe parameter includes first information, the first information is for determining a manner of obtaining a first PCS key, the first PCS key is a key used for a PCS link between the first terminal device and a second terminal device, and the manner of obtaining the first PCS key includes a control plane manner and/or a user plane manner. For example, the first information indicates to obtain a PCS key in the control plane manner and/or the user plane manner.

For another example, the first information includes a mapping relationship between a first PLMN ID of a home network of the first terminal device and second indication information or a mapping relationship between a second PLMN ID of a home network of the second terminal device and second indication information, and the second indication information indicates to obtain a PCS key in the control plane manner and the user plane manner.

Optionally, when the second indication information is corresponding to the second PLMN ID, the first PCS key is generated by a network element in the second PLMN; or when the second indication information is corresponding to the first PLMN ID, the first PCS key is generated by a network element in the first PLMN.

For still another example, the first information includes a mapping relationship between identifier information of a relay service corresponding to the PCS link and second indication information, and the second indication information indicates to obtain a PCS key in the control plane manner and the user plane manner.

With reference to the seventh aspect, in some possible implementations of the seventh aspect, the first request message includes the first information.

With reference to the seventh aspect, in some possible implementations of the seventh aspect, the transceiver unit is further configured to obtain the first information from local configuration. With reference to the seventh aspect, in some possible implementations of the seventh aspect, the transceiver unit is further configured to receive the first information from an application function network element.

With reference to the seventh aspect, in some possible implementations of the seventh aspect, the transceiver unit is further configured to: send, to a first network element, a request message for requesting the first information; and the transceiver unit is further configured to receive the first information from the first network element. The first network element is a unified data management network element or a direct communication discovery name management network element.

According to an eighth aspect, a communication apparatus is provided, where the communication apparatus includes a transceiver unit. The transceiver unit is configured to receive subscription data and first information of a first terminal device from a unified data management network element, where the first information is used by the first terminal device to determine a manner of obtaining a first PCS key, the first PCS key is a key used for a PCS link between the first terminal device and a second terminal device, and the manner of obtaining the first PCS key includes a control plane manner and/or a user plane manner. The transceiver unit is further configured to: send, to a policy control function network element, a request message for requesting a ProSe parameter of the first terminal device, where the first request message includes the first information. For example, the first information indicates to obtain a PCS key in the control plane manner and/or the user plane manner.

For another example, the first information includes a mapping relationship between a first PLMN ID of a home network of the first terminal device and second indication information or a mapping relationship between a second PLMN ID of a home network of the second terminal device and second indication information, and the second indication information indicates to obtain a PCS key in the control plane manner and the user plane manner.

Optionally, when the second indication information is corresponding to the second PLMN ID, the first PCS key is generated by a network element in the second PLMN; or when the second indication information is corresponding to the first PLMN ID, the first PCS key is generated by a network element in the first PLMN.

For still another example, the first information includes a mapping relationship between identifier information of a relay service corresponding to the PCS link and second indication information, and the second indication information indicates to obtain a PCS key in the control plane manner and the user plane manner.

According to a ninth aspect, this application provides a communication device including a processor. The processor is coupled to a memory, and may be configured to execute instructions in the memory, to implement the method according to any one of the first aspect and the possible implementations of the first aspect. The communication device further includes a memory. The communication device further includes a communication interface, and the processor is coupled to the communication interface.

In an implementation, the communication device is a first terminal device. When the communication device is the first terminal device, the communication interface may be a transceiver or an input/output interface.

In another implementation, the communication device is a chip or a chip system configured in a first terminal device. When the communication device is the chip or the chip system configured in the first terminal device, the communication interface may be an input/output interface.

The transceiver may be a transceiver circuit. The input/output interface may be an input/output circuit.

According to a tenth aspect, this application provides a communication device including a processor. The processor is coupled to a memory, and may be configured to execute instructions in the memory, to implement the method according to any one of the second aspect and the possible implementations of the second aspect. The communication device further includes a memory. The communication device further includes a communication interface, and the processor is coupled to the communication interface.

In an implementation, the communication device is a second terminal device. When the communication device is the second terminal device, the communication interface may be a transceiver or an input/output interface.

In another implementation, the communication device is a chip or a chip system configured in a second terminal device. When the communication device is the chip or the chip system configured in the second terminal device, the communication interface may be an input/output interface. The transceiver may be a transceiver circuit. The input/output interface may be an input/output circuit.

According to an eleventh aspect, this application provides a communication device including a processor. The processor is coupled to a memory, and may be configured to execute instructions in the memory, to implement the method according to any one of the third aspect and the possible implementations of the third aspect. The communication device further includes a memory. The communication device further includes a communication interface, and the processor is coupled to the communication interface.

In an implementation, the communication device is a policy control function network element.

When the communication device is the policy control function network element, the communication interface may be a transceiver or an input/output interface.

In another implementation, the communication device is a chip or a chip system configured in a policy control function network element. When the communication device is the chip or the chip system configured in the policy control function network element, the communication interface may be an input/output interface.

The transceiver may be a transceiver circuit. The input/output interface may be an input/output circuit.

According to a twelfth aspect, this application provides a communication device including a processor. The processor is coupled to a memory, and may be configured to execute instructions in the memory, to implement the method according to any one of the fourth aspect and the possible implementations of the fourth aspect. The communication device further includes a memory. The communication device further includes a communication interface, and the processor is coupled to the communication interface.

In an implementation, the communication device is an access and mobility management function network element. When the communication device is the access and mobility management function network element, the communication interface may be a transceiver or an input/output interface.

In another implementation, the communication device is a chip or a chip system configured in the access and mobility management function network element. When the communication device is the chip or the chip system configured in the access and mobility management function network element, the communication interface may be an input/output interface.

The transceiver may be a transceiver circuit. The input/output interface may be an input/output circuit.

According to a thirteenth aspect, this application provides a processor, including an input circuit, an output circuit, and a processing circuit. The processing circuit is configured to: receive a signal through the input circuit, and transmit a signal through the output circuit, so that the processor performs the methods in the foregoing aspects.

During specific implementation, the processor may be a chip, the input circuit may be an input pin, the output circuit may be an output pin, and the processing circuit may be a transistor, a gate circuit, a trigger, various logic circuits, or the like. An input signal received by the input circuit may be, for example, but not limited to, received and input by a receiver, and a signal output by the output circuit may be, for example, but not limited to, output to a transmitter and transmitted by the transmitter. The input circuit and the output circuit may be a same circuit, and the circuit is used as the input circuit and the output circuit at different moments. Specific implementations of the processor and the various circuits are not limited in this embodiment of this application.

According to a fourteenth aspect, this application provides a processing apparatus, including a communication interface and a processor. The communication interface is coupled to the processor. The communication interface is configured to input and/or output information. The information includes at least one of instructions or data. The processor is configured to execute a computer program, so that the processing apparatus performs the methods in the foregoing aspects.

According to a fifteenth aspect, this application provides a processing apparatus, including a processor and a memory. The processor is configured to: read instructions stored in the memory, receive a signal by using a receiver, and transmit a signal by using a transmitter, so that the processing apparatus performs the methods in the foregoing aspects.

Optionally, there are one or more processors. If there is a memory, there may alternatively be one or more memories.

Optionally, the memory and the processor may be integrated together, or the memory and the processor may be separately disposed.

During specific implementation, the memory may be a non-transitory (non-transitory) memory such as a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that in a related information exchange process, for example, sending indication information may be a process of outputting the indication information from the processor, and receiving the indication information may be a process of inputting the received indication information to the processor. Specifically, the information output by the processor may be output to the transmitter, and the input information received by the processor may be from the receiver. The transmitter and the receiver may be collectively referred to as a transceiver.

The apparatuses according to the fourteenth aspect and the fifteenth aspect each may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. The memory may be integrated in the processor, or may be located outside the processor and exist independently.

According to a sixteenth aspect, this application provides a computer program product. The computer program product includes a computer program (also referred to as code or instructions). When the computer program is run, a computer is enabled to perform the methods in the foregoing aspects.

According to a seventeenth aspect, this application provides a computer-readable storage medium. The computer-readable storage medium stores a computer program (also referred to as code or instructions). When the computer program is run on a computer, the computer is enabled to perform the methods in the foregoing aspects.

According to an eighteenth aspect, this application provides a communication system, including the foregoing first terminal device and second terminal device, or including the foregoing first terminal device and/or second terminal device, the policy control function network element, and the access and mobility management function network element.

### BRIEF DESCRIPTION OF DRAWINGS

FIG. 1 is a schematic diagram of a network architecture applicable to an embodiment of this application;
FIG. 2 is a schematic flowchart of establishing a unicast connection between remote UE and relay UE;
FIG. 3 is a schematic flowchart of a method for determining a key obtaining manner according to an embodiment of this application;
FIG. 4 is a schematic flowchart of a method for determining a key obtaining manner according to another embodiment of this application;
FIG. 5 is a schematic flowchart of a method for determining a key obtaining manner according to another embodiment of this application;
FIG. 6 is a schematic flowchart of a method for determining a key obtaining manner according to another embodiment of this application;
FIG. 7 is a schematic flowchart of a method for determining a key obtaining manner according to another embodiment of this application;
FIG. 8 is a schematic flowchart of a communication method according to an embodiment of this application;
FIG. 9 is a schematic flowchart of a method for determining a key obtaining manner according to another embodiment of this application;
FIG. 10 is a schematic flowchart of a method for determining a key obtaining manner according to another embodiment of this application;
FIG. 11 is a schematic block diagram of a communication apparatus according to an embodiment of this application;
FIG. 12 is a schematic block diagram of a communication device according to an embodiment of this application; and
FIG. 13 is a schematic diagram of a chip system according to an embodiment of this application.

### DESCRIPTION OF EMBODIMENTS

The following describes technical solutions in this application with reference to the accompanying drawings.

The technical solutions provided in embodiments of this application may be applied to various communication systems, for example, a long term evolution (long term evolution, LTE) system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system or a new radio (new radio, NR) system, or a 6th generation (6th generation, 6G) system or a future communication system. A 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an internet of things (Internet of Things, IoT) communication system, a vehicle-to-everything (vehicle-to-everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or descriptions. Any embodiment or design scheme described as an "example" or with "for example" in embodiments of this application should not be explained as being more preferred or having more advantages than another embodiment or design scheme. Exactly, use of the word such as "example" or "for example" is intended to present a relative concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

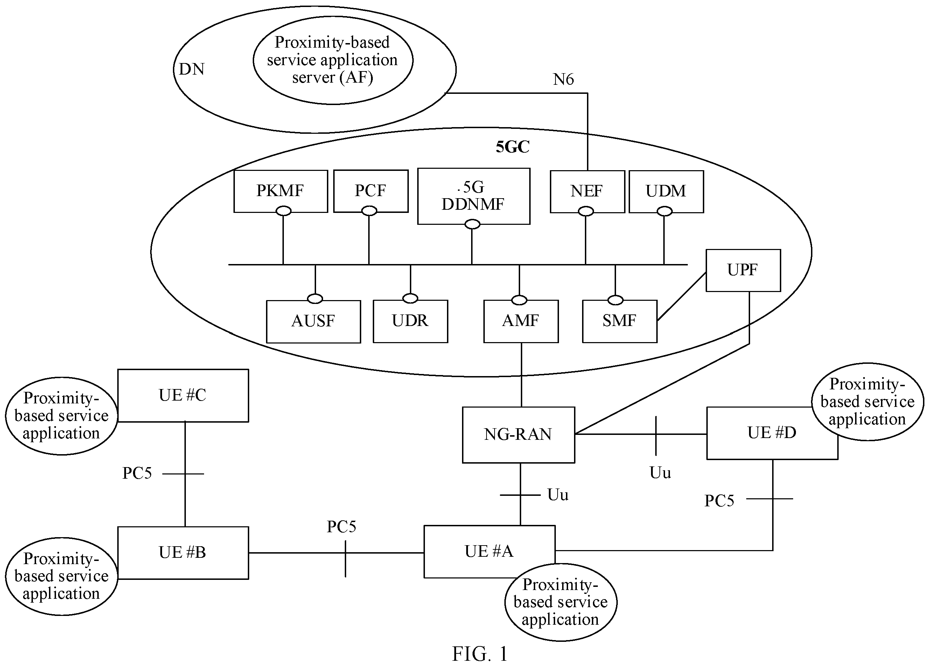

For ease of understanding embodiments of this application, an application scenario of embodiments of this application is first described in detail with reference to FIG. 1.

FIG. 1 is a schematic diagram of a network architecture applicable to a method according to an embodiment of this application. As shown in the figure, the network architecture may specifically include the following network elements.
1. User equipment (user equipment, UE): The user equipment may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a wearable device, a terminal device in a 5G network, a terminal device in an evolved public land mobile network (public land mobile network, PLMN), or the like. This is not limited in embodiments of this application. The UE may be connected to a next generation radio access network (next generation radio access network, NG-RAN) device through a Uu interface. For example, UE #A and UE #D shown in FIG. 1 are connected to an NG-RAN through a Uu interface. Two UEs having a proximity-based service application (proximity-based service application, ProSe application) function may also be connected through a PC5 interface. For example, as shown in FIG. 1, UE #A and UE #B are connected through a PCS interface, UE #B and UE #C are connected through a PCS interface, and UE #A and UE #D are connected through a PCS interface.
2. Access network (access network, AN): The access network provides a network access function for an authorized user in a specific area, and can use transmission tunnels with different quality based on user levels, service requirements, and the like. Different access networks may use different access technologies. Current access network technologies include a radio access network technology used in a third generation (3rd generation, 3G) system, a radio access network technology used in a 4G system, the NG-RAN technology (for example, a radio access technology used in a 5G system) shown in FIG. 1, and the like.
   An access network that implements the network access function based on a wireless communication technology may be referred to as a radio access network (radio access network, RAN). The radio access network can manage radio resources, provide an access service for a terminal, and further complete forwarding of a control signal and user data between the terminal and a core network.
   The radio access network device may be, for example, a NodeB (NodeB), an evolved NodeB (evolved NodeB, eNB, or eNodeB), a next generation node base station (next generation Node Base station, gNB) in a 5G mobile communication system, a base station in a mobile communication system, or an access point (access point, AP) in a Wi-Fi wireless hotspot (Wi-Fi) system, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.
3. Access management network element: The access management network element is mainly used for mobility management and access management, is responsible for transferring a user policy between user equipment and a policy control function (policy control function, PCF) network element, and the like, and may be configured to implement a function other than session management in functions of a mobility management entity (mobility management entity, MME), for example, a lawful interception function or an access authorization (or authentication) function. In a 5G communication system, the access management network element may be an access and mobility management function (access and mobility management function, AMF) network element. In a future communication system, the access management network element may still be an AMF network element, or may have another name. This is not limited in this application.
4. Session management network element: The session management network element is mainly configured to: manage a session, allocate and manage an Internet Protocol (internet protocol, IP) address of user equipment, select an endpoint that can manage a user plane function interface and a policy control and charging function interface, perform downlink data notification, and the like. In the 5G communication system, the session management network element may be a session management function (session management function, SMF) network element. In the future communication system, the session management network element may still be an SMF network element, or may have another name. This is not limited in this application.
5. User plane network element: The user plane network element is configured to: perform functions such as packet routing and forwarding, quality of service (quality of service, QoS) processing of user plane data, user plane data forwarding, charging statistics based on a session/flow-level, and bandwidth limitation.
   In the 5G communication system, the user plane network element may be a user plane function (user plane function, UPF) network element. In the future communication system, the user plane network element may still be a UPF network element, or may have another name. This is not limited in this application.
6. Data network element: The data network element is configured to provide a network for data transmission.
   In the 5G communication system, the data network element may be a data network (data network, DN) network element. In the future communication system, the data network element may still be a DN network element, or may have another name. This is not limited in this application.
7. Policy control network element: The policy control network element is configured to: provide guidance on a unified policy framework for network behavior, provide policy rule information for a control plane function network element (for example, an AMF or SMF network element), and the like.
   In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.
8. Data management network element: The data management network element is configured to: process a user equipment identifier, perform access authentication, perform registration management and mobility management, and the like.
   In the 5G communication system, the data management network element may be a unified data management (unified data management, UDM) network element. In the 4G communication system, the data management network element may be a home subscriber server (home subscriber server, HSS) network element. In the future communication system, the data management network element may still be a UDM network element, or may have another name. This is not limited in this application.
9. Data repository network element: The data repository network element is configured to: be responsible for an access function of subscription data, policy data, application data, and other types of data.
   In the 5G communication system, the data repository network element may be a unified data repository (unified data repository, UDR) network element. In the future communication system, the data repository network element may still be a UDR element, or may have another name. This is not limited in this application.
10. Network exposure function (network exposure function, NEF) entity: The network exposure function entity is configured to: securely open, to the outside, a service and a capability that are provided by a 3GPP network function.
11. ProSe application server (application server, AS): The ProSe application server may be an application function (application function, AF) of the DN, or may be an AS that provides a ProSe service. An AF that has a ProSe application server function has all functions of the AF defined in 23.501 Release R-15, as well as a related function used for the ProSe service. In other words, in a user plane architecture, the ProSe application server and the UE perform user plane communication by using a path of UE-RAN-UPF-AF. The ProSe application server may further communicate, in a control plane architecture by using the NEF, with another network function (network function, NF) in a 5G core network (SG core network, 5GC), for example, communicate with the PCF by using the NEF. If the ProSe application server is an AF of the DN, and the AF is disposed by a carrier of the 5GC, the ProSe application server may further directly communicate, in the control plane architecture without using the NEF, with another NF in the 5GC, for example, directly communicate with the PCF.
12. 5G direct communication discovery name management function (direct discovery name management function, DDNMF): The 5G direct communication discovery name management function has a function of allocating and processing a mapping relationship between a proximity-based service application identifier (ProSe application identifier) and a proximity-based service application code (ProSe application code) for open proximity-based service discovery (open ProSe discovery). In restricted proximity-based service discovery (restricted ProSe direct discovery), the 5G DDNMF may communicate with a proximity-based service application server through a PC2 interface, to process authorization of a discovery request (discovery request), and also has a function of not allocating and processing a mapping relationship between an application identifier (application identifier) and code used in a restricted proximity-based service. The code used in the restricted proximity-based service includes restricted proximity-based service code (ProSe restricted code), proximity-based service request code (ProSe query code), and proximity-based service reply code (ProSe response code).
   In a current standard definition, the 5G DDNMF is at a PLMN granularity. To be specific, one PLMN has only one 5G DDNMF. One 5G DDNMF may be uniquely identified by using mobile country code (mobile country code, MCC) and mobile network code (mobile network code, MNC).
13. Authentication server function (authentication server function, AUSF): The AUSF network element authenticates and authorizes a user.
14. Proximity-based service key management function (ProSe key management function, PKMF): The proximity-based service key management function may be responsible for generating and distributing, for UE using the proximity-based service, a key used for a PCS interface connection, and the UE needs to interact with the PKMF by using a control plane to obtain the key used for the PCS interface.

It may be understood that the foregoing network elements or functions may be network elements in a hardware device, may be software functions running on dedicated hardware, or may be virtualized functions instantiated on a platform (for example, a cloud platform). The foregoing network elements or functions may be implemented by one device, or may be jointly implemented by a plurality of devices, or may be one function module in one device. This is not specifically limited in embodiments of this application.

It should be further understood that the foregoing network architecture applicable to embodiments of this application shown in FIG. 1 is merely an example for description, and a network architecture applicable to embodiments of this application is not limited thereto. Any network architecture that can implement functions of the foregoing network elements is applicable to embodiments of this application.

For example, in some network architectures, network function network element entities such as an AMF, an SMF network element, a PCF network element, and a UDM network element are all referred to as network function (network function, NF) network elements. Alternatively, in some other network architectures, a set of network elements such as an AMF, an SMF network element, a PCF network element, and a UDM network element may be referred to as a control plane function network element. Because the UE needs to interact with the PKMF and the DDNMF by using a user plane, network elements such as the PKMF and the DDNMF may be referred to as user plane network elements.

With rapid development of mobile communication, universal use of new service types, for example, data services such as video services and virtual reality (virtual reality, VR)/augmented reality (augmented reality, AR), increases a bandwidth requirement of a user. D2D communication allows direct communication between UEs, and may share a spectrum resource with a cell user under control of a cell network, to effectively improve utilization of the spectrum resource. Currently, the D2D communication has been applied to the 4G network system, and is collectively referred to as proximity-based service (proximity-based service, ProSe) communication.

The D2D communication includes one-to-many communication (one to many communication) and one-to-one communication (one to one communication). The one-to-many communication corresponds to multicast and broadcast communication, and the one-to-one communication corresponds to unicast communication. In the one-to-one communication, if sender UE and receiver UE are in a short distance range, the sender UE and the receiver UE may directly communicate with each other after mutual discovery. In the D2D communication, UE directly performs communication through a PCS interface, to perform data-plane and signaling-plane information transmission.

When UE is located outside network coverage or a communication signal between the UE and a RAN is poor, remote UE (remote UE) may use relay UE (relay UE) to assist in communication. In other words, the remote UE obtains a service through communication between the remote UE and the relay UE and communication between the relay UE and a mobile network. By establishing a communication manner from the remote UE to the relay UE to the network, UE-to-network communication outside the network coverage can be extended to be supported. The communication manner from the remote UE to the relay UE to the network may be referred to as UE-to-network relay (UE-to-network relay) communication.

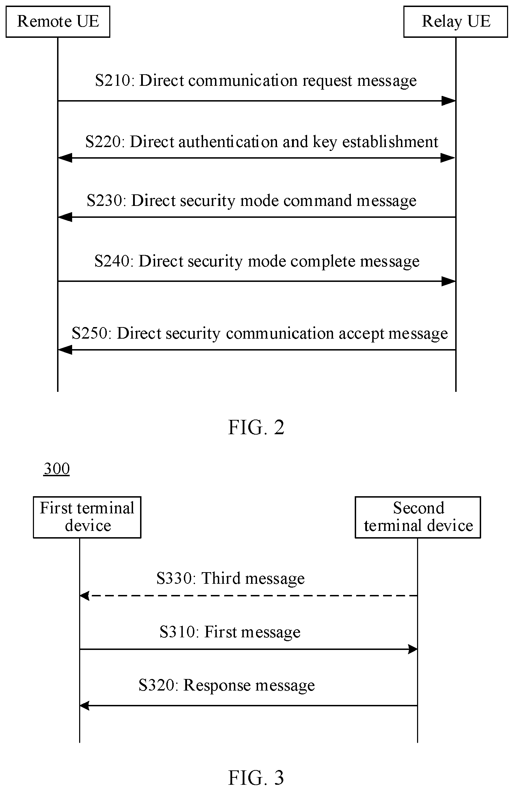

For a UE-to-network relay communication service in the ProSe, before establishing PCS unicast communication, the remote UE and the relay UE need to first perform a ProSe discovery procedure, to determine peer UE in communication. After the discovery procedure, the remote UE and the relay UE perform a PCS unicast communication security establishment procedure. A specific procedure is shown in FIG. 2. It should be noted that the procedure in FIG. 2 is described according to a reference technology for unicast establishment in 3GPP TS 33.536 (v16.4.0).

S210: Remote UE sends a direct communication request (direct communication request, DCR) message to relay UE to initiate establishment of PC5 unicast communication.

The direct communication request message may include random number information generated by the remote UE, and the random number information is for generating, on a network side, a PCS key used for the PCS unicast communication and a control plane security protection policy (signaling security policy) of the remote UE. A security capability of UE is a security protection algorithm supported by the UE, and the security protection algorithm includes a confidentiality protection algorithm and/or an integrity protection algorithm.

S220: The remote UE and the relay UE perform a direct authentication and key establishment procedure.

In the UE-to-network communication service scenario in the ProSe, the direct authentication and key establishment procedure performed between the remote UE and the relay UE need to be completed by using the network side. To be specific, in the direct authentication and key establishment procedure, the relay UE needs to interact with the network side to obtain a PCS key used for the PCS unicast communication.

S230: The relay UE sends a direct security mode (direct security mode, DSM) command (command) message to the remote UE.

After receiving the direct communication request message from the remote UE, the relay UE first determines a control plane security protection enabling manner based on control plane security protection policies of the two UEs. If the security protection is enabled, the relay UE interacts with the network side to perform the direct authentication and key establishment procedure in step S220 to obtain the PCS key. Further, the relay UE sends the direct security mode command message to the remote UE, where the direct security mode command message includes a selected security protection algorithm, and the security protection algorithm includes a confidentiality protection algorithm and an integrity protection algorithm.

The direct security mode command message may carry key derivation information or a key identifier obtained from the network side. The remote UE derives the PCS key by using the key derivation information, or the remote UE determines the PCS key based on the key identifier. The PCS key is the same as the PCS key obtained by the relay UE from the network side.

S240: The remote UE sends a direct security mode complete (complete) message to the relay UE. After the remote UE receives the direct security mode command message from the relay UE, if the security protection enabling manner implicitly indicated by the selected security algorithm carried in the direct security mode command message meets the control plane security protection policy of the local end, the remote UE sends the direct security mode complete message to the relay UE. The direct security mode complete message includes a user plane security protection policy (user plane security policy) of the remote UE.

S250: The relay UE sends a direct communication accept (direct communication accept, DCA) message to the remote UE.

After the relay UE receives the direct security mode complete message from the remote UE, the relay UE determines a user plane security protection enabling manner based on user plane security protection policies of the two UEs. Further, the relay UE sends a direct communication accept message to the remote UE, where the direct communication accept message includes user plane security configuration (user plane security configuration) information, and is for notifying UE #1 of the selected user plane security protection enabling manner.

In S220, the remote UE and the relay UE share the key through mutual authentication and negotiation. Currently, there are two solutions for negotiating the PCS key in UE-to-network relay communication: a control plane-based solution and a user plane-based solution. In the control plane-based solution, a PCS shared key is derived based on a key generated after primary authentication is performed between remote UE and a 3GPP network. In the user plane-based solution, a ProSe key management function (ProSe key management function, PKMF) for key generation, management, and distribution needs to be deployed, and UE needs to obtain a PCS key from the PKMF by using the user plane. However, in a process in which the remote UE and the relay UE establish the PCS unicast connection, how to determine a solution of negotiating the PCS key is not resolved. To be specific, currently, a condition based on which to select the control plane-based solution or the user plane-based solution to obtain the PCS key is not determined.

In view of this, this application provides a method for determining a key obtaining manner, to resolve a problem of how to determine a manner of obtaining a PCS key.

It should be noted that, a specific structure of an execution body of a method provided in embodiments of this application is not specifically limited in embodiments shown in the following specification, provided that a program that records code of the method provided in embodiments of this application can be run to perform communication according to the method provided in embodiments of this application. For example, the method provided in embodiments of this application may be performed by a terminal device, a core network device, or a function module that can invoke and execute the program and that is in the terminal device or the core network device.

Without loss of generality, the following describes in detail the key determining method provided in embodiments of this application by using interaction between the terminal device or the core network device as an example.

FIG. 3 is a schematic flowchart of a method for determining a key obtaining manner according to an embodiment of this application. As shown in FIG. 3, the method 300 may include S310 to 5330. The following describes the steps in detail.

S310: A first terminal device sends a first message. Correspondingly, in S310, a second terminal device receives the first message.

The first terminal device is a remote terminal device, and the second terminal device is a relay terminal device; or the first terminal device is a relay terminal device, and the second terminal device is a remote terminal device.

The first message includes first indication information, and the first indication information indicates to obtain a first PCS key in a control plane manner. The first PCS key is a key used for a PCS link between the first terminal device and the second terminal device. The first indication information may be explicit indication information, for example, dedicated indication information. Alternatively, a specific parameter specific to obtaining the first PCS key in the control plane manner may be used to implicitly indicate to obtain the first PCS key in the control plane manner. For example, the first message carries a parameter A when the first PCS key is to be obtained in the control plane manner, and the first message does not include the parameter A when the first PCS key is to be obtained in the user plane manner. In this case, the parameter A is the first indication information, and that the first message carries the parameter A may implicitly indicate to obtain the first PCS key in the control plane manner.

It should be noted that obtaining the first PCS key in the control plane manner means that the relay terminal device obtains, through interaction with a key management network element in a network by using the control plane, PCS key information and information required for generating the first PCS key. The relay terminal device directly obtains the first PCS key from the PCS key information. The relay terminal device needs to send, to the remote terminal device, the information required for generating the PCS key, and the remote terminal device determines the first PCS key based on the information required for generating the PCS key. Obtaining the first PCS key in the user plane manner means that the relay terminal device obtains, through interaction with a key management network element in a network by using the user plane, PCS key information and information required for generating the PCS key. The relay terminal device directly obtains the first PCS key from the PCS key information. The relay terminal device needs to send, to the remote terminal device, the information required for generating the PCS key, and the remote terminal device determines the first PCS key based on the information required for generating the PCS key. It should be additionally noted that, information required for generating the PCS key may be random number information or PCS key identifier information. The information required for generating the PCS key in the control plane manner and the information required for generating the PCS key in the user plane manner may be different or the same.

Specifically, in S310, when a preset condition is met, the first terminal device sends the first message to the second terminal device.

For example, the preset condition includes one or more of the following: a first PLMN identifier (identifier, ID) of a home network of the first terminal device is inconsistent with a second PLMN ID of a home network of the second terminal device, a first relay service code (relay service code, RSC) used by the first terminal device in a proximity direct discovery (ProSe direct discovery) procedure corresponds to a layer-2 UE-to-network relay communication service, a second RSC used by the second terminal device in a proximity direct discovery procedure corresponds to the layer-2 UE-to-network relay communication service, key information that is obtained by the first terminal device from a key management network element and that is for determining the first PCS key expires, and the first terminal device has not obtained the key information. The key information for determining the first PCS key includes the first PCS key and/or an identifier of the first PCS key. For example, the key management network element is a PKMF, an AUSF, or an AMF. When the first PCS key is obtained in the user plane manner, the key management network element is the PKMF. When the first PCS key is obtained in the control plane manner, the key management network element is the AUSF or the AMF.

It should be noted that, when the first terminal device determines that the first PCS key can be obtained in the control plane manner and the user plane manner, the first terminal device determines, depending on whether the preset condition is met, whether to obtain the first PCS key in the control plane manner. If the preset condition is met, the first terminal device determines to obtain the first PCS key in the control plane manner; or if none of the preset conditions is met, the first terminal device determines to obtain the first PCS key in the control plane manner or the user plane manner. Further, if the first terminal device determines to obtain the first PCS key in the control plane manner, the first terminal device sends, to the second terminal device, a first message that carries the first indication information; or if the first terminal device determines to obtain the first PCS key in the user plane manner, the first terminal device sends, to the second terminal device, a first message that does not carry the first indication information, or sends, to the second terminal device, a first message that carries fourth indication information, where the fourth indication information indicates to obtain the first PCS key in the user plane manner. That the preset condition is met means that at least one of the preset conditions is met.

Optionally, when at least one of the preset conditions is met, the first indication information indicates to obtain the first PCS key in the user plane manner. The first PCS key is a key used for a PCS link between the first terminal device and the second terminal device. The preset condition includes one or more of the following: the first PLMN ID is consistent with the second PLMN ID, the first RSC used by the first terminal device in the proximity direct discovery procedure corresponds to a layer-3 UE-to-network relay communication service using a non-3GPP interworking function (non-3GPP interworking function, N3IWF) for access, and the first RSC used by the first terminal device in the proximity direct discovery procedure corresponds to the layer-3 UE-to-network relay communication service; the first terminal device has obtained the key information from a key management network element that obtains the first PCS key in the user plane manner.

In a possible implementation, the first terminal device determines, based on predefinition in a protocol or default configuration of a device, that the first PCS key can be obtained in the control plane manner and the user plane manner. The predefinition in the protocol or the default configuration of the device may explicitly indicate to obtain the first PCS key in the control plane manner and the user plane manner, or may implicitly indicate to obtain the first PCS key in the control plane manner and the user plane manner. In this case, the implicit method may be not defining or limiting the manner of obtaining the first PCS key. To be specific, before step S310 is performed, the first terminal does not determine, by using the predefinition in the protocol, the default configuration of the device, or information by received from the network side, the manner of obtaining the first PCS key.

In another possible implementation, the first terminal device determines, based on the first information, that the first PCS key can be obtained in the control plane manner and the user plane manner. The first information is for determining the manner of obtaining the first PCS key.

For example, the first information indicates that the PCS key can be obtained in the control plane manner and the user plane manner. Correspondingly, the first terminal device determines, based on the first information, that the first PCS key can be obtained in the control plane manner and the user plane manner. It should be noted that the first information corresponds to the first PLMN ID, and the first information may not indicate a correspondence between the first information and the first PLMN ID, that is, the first information does not include identifier information that may indicate the first PLMN ID. For example, the first information may be indication information obtained by a network element and/or UE in a PLMN corresponding to the first PLMN ID.

For another example, the first information includes a first mapping relationship, the first mapping relationship includes a correspondence between at least one piece of indication information and at least one PLMN ID, each of the at least one piece of indication information indicates to obtain the PCS key in the control plane manner and/or the user plane manner, and the at least one PLMN ID includes the first PLMN ID and/or the second PLMN ID. Correspondingly, the first terminal device determines, based on second indication information, that the first PCS key can be obtained in the control plane manner and the user plane manner, the second indication information indicates to obtain the PCS key in the control plane manner and the user plane manner, and the second indication information is indication information that is in the at least one piece of indication information and that corresponds to the first PLMN ID or the second PLMN ID. For example, if the first mapping relationship includes the first PLMN ID and indication information corresponding to the first PLMN ID, the second indication information is the indication information corresponding to the first PLMN ID. In other words, in this case, the first mapping relationship includes a mapping relationship between the second indication information and the first PLMN ID. For another example, if the first mapping relationship includes the second PLMN ID and indication information corresponding to the second PLMN ID, the second indication information is the indication information corresponding to the second PLMN ID. In other words, in this case, the first mapping relationship includes a mapping relationship between the second indication information and the second PLMN ID. For still another example, if the first mapping relationship includes the first PLMN ID, indication information corresponding to the first PLMN ID, the second PLMN ID, and indication information corresponding to the second PLMN ID, the second indication information is the indication information corresponding to the first PLMN ID and the indication information corresponding to the second PLMN ID. In other words, in this case, the first mapping relationship includes a mapping relationship between the second indication information and the second PLMN ID or the first PLMN ID.

Optionally, when the second indication information corresponds to the first PLMN ID, the first PCS key is generated by a network element in the first PLMN. When the second indication information corresponds to the second PLMN ID, the first PCS key is generated by a network element in the second PLMN.

For still another example, the first information includes a second mapping relationship, the second mapping relationship includes a correspondence between at least one piece of indication information and identifier information of at least one relay service, each of the at least one piece of indication information indicates to obtain the PCS key in the control plane manner and the user plane manner, the at least one relay service includes a first relay service, and the first relay service corresponds to the PCS link between the first terminal device and the second terminal device, that is, the PCS link is established for the first relay service. It should be noted that the identifier information of the relay service may identify a specific proximity-based service (ProSe service), and the identifier information of the relay service may be an RSC, or may be service name information, for example, a service identifier (service identifier). Correspondingly, the first terminal device determines, based on the second indication information, that the first PCS key can be obtained in the control plane manner and the user plane manner, the second indication information indicates to obtain the PCS key in the control plane manner and the user plane manner, and the second indication information is indication information that is in the at least one piece of indication information and that corresponds to identifier information of the first relay service. It should be noted that each of the at least one relay service is a UE-to-network relay communication service.

It should be noted that, when the first information includes the first mapping relationship, in addition to the correspondence between the first PLMN ID and the second indication information or the mapping relationship between the second PLMN ID and the second indication information, the first mapping relationship may further include a mapping relationship between a PLMN ID and indication information that indicates a manner of obtaining the PCS key and that is in all PLMNs that have a roaming agreement with a carrier of the home network of the first terminal device. When the first information includes the second mapping relationship, in addition to a mapping relationship between the identifier information of the first relay service and the second indication information, the second mapping relationship may further include a mapping relationship between relay service identifier information of all relay services that can be used by the first terminal device and corresponding indication information that indicates a manner of obtaining the PCS key.

A manner in which the first terminal device obtains the first information is not limited in this embodiment of this application.

In an example, the first terminal device obtains a ProSe parameter from a PCF, where the ProSe parameter includes the first information. With reference to a method 800, the following describes in detail how the first terminal device obtains, from the PCF, the ProSe parameter including the first information. For brevity, details are not described herein.

In another example, the first terminal device obtains the first information from an AF or an AS. To be specific, after registering with the network and establishing a link to the AF or the AS, the first terminal device may obtain the first information from the AF or the AS. The link from the first terminal device to the AF or the AS may be a user plane link. It should be noted that the first information obtained by the first terminal device from the AF or the AS includes the first mapping relationship or the second mapping relationship.

In still another example, the first terminal device obtains the first information locally. For example, the first terminal device obtains the first information from a universal integrated circuit card (universal integrated circuit card, UICC), or the first terminal device obtains the first information from a mobile terminal (mobile terminal, MT) corresponding to the first terminal device or mobile equipment (mobile equipment, ME) corresponding to the first terminal device, where the first terminal device includes a UICC and an MT, or the first terminal device includes a UICC and ME. It should be noted that, if the first information indicates that the PCS key can be obtained in the control plane manner and the user plane manner, the first information is preconfigured in the first terminal device by the carrier of the home network of the first terminal device; if the first information includes the first mapping relationship, the carrier of the home network of the first terminal device preconfigures a correspondence between indication information and a PLMN ID in the first terminal device, where the carrier of the home network of the first terminal device needs to obtain, in advance, the indication information that indicates the manner of obtaining the PCS key and that is in all PLMNs that have a roaming agreement with the carrier of the home network of the first terminal device; or if the first information includes the second mapping relationship, service providers of different relay services preconfigure correspondences between indication information and identifier information of the relay services in the first terminal device by using the carrier of the home network of the first terminal device.

Optionally, before S310, the method 300 further includes S330: The second terminal device sends a second message to the first terminal device, where the second message includes the second PLMN ID and the second RSC.

S320: The second terminal device sends a response message of the first message. Correspondingly, in S320, the first terminal device receives the response message of the first message.

The response message indicates, to the first terminal device, whether the second terminal device can obtain the first PCS key, or the response message indicates, to the first terminal device, whether the second terminal device can obtain the first PCS key in the control plane manner.

Optionally, if the first indication information further indicates to obtain the first PCS key in the user plane manner, the response message indicates, to the first terminal device, whether the second terminal device can obtain the first PCS key, or the response message indicates, to the first terminal device, whether the second terminal device can obtain the first PCS key in the user plane manner. Specifically, in S320, if the second terminal device determines that the first PCS key can be obtained in the control plane manner or the user plane manner, the response message sent by the second terminal device to the first terminal device indicates, to the first terminal device, that the second terminal device can obtain the first PCS key, or the response message indicates, to the first terminal device, that the second terminal device can obtain the first PCS key in the control plane manner or the user plane manner; or if the second terminal device determines that the first PCS key cannot be obtained in the control plane manner or the user plane manner, the response message sent by the second terminal device to the first terminal device indicates, to the first terminal device, that the second terminal device cannot obtain the first PCS key, or the response message indicates, to the first terminal device, that the second terminal device cannot obtain the first PCS key in the control plane manner or the user plane manner.

Optionally, in S320, if the second terminal device determines that the first PCS key can be obtained in the control plane manner or the user plane manner, the second terminal device sends the response message of the first message to the first terminal device, where the response message indicates, to the first terminal device, that the second terminal device can obtain the first PCS key, or the response message indicates, to the first terminal device, that the second terminal device can obtain the first PCS key in the control plane manner or the user plane manner. If the second terminal device determines that the first PCS key cannot be obtained in the control plane manner or the user plane manner, the second terminal device does not send the response message of the first message to the first terminal device.

It should be noted that, when the second terminal device determines that the first PCS key can be obtained in the control plane manner or the user plane manner, the response message sent by the second terminal device to the first terminal device does not necessarily explicitly indicate that the second terminal device can obtain the first PCS key. It may be understood as that, once the second terminal device sends the response message of the first message to the first terminal device, the second terminal device can obtain the first PCS key by default.

The manner in which the second terminal device determines the manner of obtaining the first PCS key is not limited in this embodiment of this application.

In a possible implementation, the second terminal device determines, based on predefinition in a protocol or default configuration of a device, that the first PCS key can be obtained in the control plane manner and/or the user plane manner. The predefinition in the protocol or the default configuration of the device may explicitly indicate to obtain the first PCS key in the control plane manner and/or the user plane manner, or may implicitly indicate to obtain the first PCS key in the control plane manner and/or the user plane manner. In this case, the implicit method may be not defining or limiting the manner of obtaining the first PCS key. To be specific, before step S320 is performed, the second terminal device does not determine, by using the predefinition in the protocol, the default configuration of the device, or information by received from the network side, the manner of obtaining the first PCS key.

In another possible implementation, the second terminal device determines, based on the second information, that the first PCS key can be obtained in the control plane manner and/or the user plane manner. The second information is for determining the manner of obtaining the first PCS key.

For example, the second information indicates that the PCS key can be obtained in the control plane manner and/or the user plane manner. Correspondingly, the second terminal device determines, based on the second information, that the first PCS key can be obtained in the control plane manner and/or the user plane manner. For example, if the second information indicates that the PCS key can be obtained in the control plane manner or the user plane manner, the second terminal device determines that the first PCS key can be obtained in the control plane manner or the user plane manner; or if the second information indicates that the PCS key can be obtained in the control plane manner and the user plane manner, the second terminal device determines that the first PCS key can be obtained in the control plane manner and the user plane manner. It should be noted that the second information corresponds to the second PLMN ID, and the second information may not indicate a correspondence between the second information and the second PLMN ID, that is, the second information does not include identifier information that may indicate the second PLMN ID. For example, the second information may be indication information obtained by a network element and/or UE in a PLMN corresponding to the second PLMN ID. For another example, the second information includes a third mapping relationship, the third mapping relationship includes a correspondence between at least one piece of indication information and at least one PLMN ID, each of the at least one piece of indication information indicates to obtain the PCS key in the control plane manner and/or the user plane manner, and the at least one PLMN ID includes the first PLMN ID and/or the second PLMN ID. Correspondingly, the first terminal device determines, based on the third indication information, the manner of obtaining the first PCS key, the third indication information indicates to obtain the PCS key in the control plane manner and/or the user plane manner, and the third indication information is indication information that is in the at least one piece of indication information and that corresponds to the first PLMN ID or the second PLMN ID. For example, if the third mapping relationship includes the first PLMN ID and indication information corresponding to the first PLMN ID, the third indication information is the indication information corresponding to the first PLMN ID. In other words, in this case, the third mapping relationship includes a mapping relationship between the third indication information and the first PLMN ID. For another example, if the third mapping relationship includes the second PLMN ID and indication information corresponding to the second PLMN ID, the third indication information is the indication information corresponding to the second PLMN ID. In other words, in this case, the third mapping relationship includes a mapping relationship between the third indication information and the second PLMN ID. For still another example, if the third indication information includes the first PLMN ID, indication information corresponding to the first PLMN ID, the second PLMN ID, and indication information corresponding to the second PLMN ID, the third indication information is the indication information corresponding to the first PLMN ID and the indication information corresponding to the second PLMN ID. In other words, in this case, the third mapping relationship includes a mapping relationship between the third indication information and the second PLMN ID or the first PLMN ID.

Optionally, when the third indication information corresponds to the first PLMN ID, the first PCS key is generated by a network element in the first PLMN. When the third indication information corresponds to the second PLMN ID, the first PCS key is generated by a network element in the second PLMN.

For still another example, the second information includes a fourth mapping relationship, the fourth mapping relationship includes a correspondence between at least one piece of indication information and identifier information of at least one relay service, each of the at least one piece of indication information indicates to obtain the PCS key in the control plane manner and/or the user plane manner, the at least one relay service includes a first relay service, and the first relay service corresponds to the PCS link between the first terminal device and the second terminal device, that is, the PCS link is established for the first relay service. It should be noted that the identifier information of the relay service may identify a specific proximity-based service, and the identifier information of the relay service may be an RSC, or may be service name information, for example, a service identifier. Correspondingly, the first terminal device determines, based on the third indication information, that the first PCS key can be obtained in the control plane manner and/or the user plane manner, the third indication information indicates to obtain the PCS key in the control plane manner and/or the user plane manner, and the third indication information is indication information that is in the at least one piece of indication information and that corresponds to identifier information of the first relay service. It should be noted that each of the at least one relay service is a UE-to-network relay communication service.

It should be noted that, when the second information includes the third mapping relationship, in addition to the correspondence between the first PLMN ID and the third indication information or the correspondence between the second PLMN ID and the third indication information, the third mapping relationship may further include a correspondence between a PLMN ID and indication information that indicates a manner of obtaining the PCS key and that is in all PLMNs that have a roaming agreement with a carrier of the home network of the second terminal device. When the second information includes the fourth mapping relationship, in addition to a correspondence between the identifier information of the first relay service and the third indication information, the fourth mapping relationship may further include a correspondence between relay service identifier information of all relay services that can be used by the second terminal device and corresponding indication information that indicates the manner of obtaining the PCS key.

A manner in which the second terminal device obtains the second information is not limited in this embodiment of this application.

In an example, the second terminal device obtains a ProSe parameter from a PCF, where the ProSe parameter includes the second information. With reference to the method 800, the following describes in detail how the second terminal device obtains, from the PCF, the ProSe parameter including the second information. For brevity, details are not described herein.

In another example, the second terminal device obtains the second information from an AF or an AS. To be specific, after registering with the network and establishing a link to the AF or the AS, the second terminal device may obtain the second information from the AF or the AS. The link from the second terminal device to the AF or the AS may be a user plane link. It should be noted that the second information obtained by the second terminal device from the AF or the AS includes the third mapping relationship or the fourth mapping relationship.

In still another example, the second terminal device obtains the second information locally. For example, the second terminal device obtains the second information from a UICC, or the second terminal device obtains the second information from an MT or ME corresponding to the second terminal device, where the second terminal device includes the UICC and the MT, or the second terminal device includes the UICC and the ME. It should be noted that, if the second information indicates that the PCS key can be obtained in the control plane manner and/or the user plane manner, the second information is preconfigured in the second terminal device by the carrier of the home network of the second terminal device; if the second information includes the third mapping relationship, the carrier of the home network of the second terminal device preconfigures a correspondence between indication information and a PLMN ID in the second terminal device, where the carrier of the home network of the second terminal device needs to obtain, in advance, the indication information that indicates the manner of obtaining the PCS key and that is in all PLMNs that have a roaming agreement with the carrier of the home network of the second terminal device; or if the second information includes the fourth mapping relationship, service providers of different relay services preconfigure correspondences between indication information and identifier information of the relay services in the first terminal device by using the carrier of the home network of the second terminal device.

In this embodiment of this application, the first terminal device determines, based on whether at least one of the preset conditions is met, whether to obtain the first PCS key in the control plane manner, so that the first terminal device and the second terminal device can obtain the first PCS key in different manners in different scenarios, to obtain the PCS key in a manner with lower signaling overheads and fewer wasted resources, to improve efficiency and a success rate of establishing the PCS link.

For example, when the first terminal device and the second terminal device are terminal devices of different PLMNs, because a remote terminal device in the first terminal device and the second terminal device cannot access an internal network element in another PLMN by using a user plane, when the first PLMN ID is inconsistent with the second PLMN ID, the first terminal device determines to obtain the first PCS key in the control plane manner, and sends the first indication information to the second terminal device, to ensure that the first terminal device and the second terminal device successfully obtain the first PCS key and successfully establish the PCS link. For another example, in a layer-2 UE-to-network relay communication service scenario, a relay terminal device is not responsible for establishing a PDU session for a remote terminal device. If the first PCS key is obtained in the user plane manner, processing burden and processing logic of the relay terminal device are additionally increased. Therefore, when the first RSC or the second RSC corresponds to the layer-2 UE-to-network relay communication service, the first terminal device determines to obtain the first PCS key in the control plane manner, and sends the first indication information to the second terminal device, so that the increase of processing logic and processing burden of the relay terminal device in the first terminal device and the second terminal device can be avoided.

For another example, in the user plane manner, the remote terminal device needs to obtain the key information from the key management network element in advance, and the key information distributed by the key management network element has a corresponding validity period. To be specific, after the key information expires, the remote terminal device cannot obtain the PCS key, or the remote terminal device needs to obtain the key information from the key management network element again. If the remote terminal device is not in network coverage, the remote terminal device cannot obtain the key information from the key management network element. Therefore, when the key information obtained by the first terminal device from the key management network element expires, or the first terminal device has not obtained the key information, the first terminal device determines to obtain the first PCS key in the control plane manner, and sends the first indication information to the second terminal device. This can ensure that the first terminal device and the second terminal device successfully obtain the first PCS key and successfully establish the PCS link.

In this embodiment of this application, the first terminal device determines, based on whether at least one of the preset conditions is met, whether to obtain the first PCS key in the user plane manner, so that the first terminal device and the second terminal device can obtain the first PCS key in different manners in different scenarios, to obtain the PCS key in a manner with lower signaling overheads and fewer wasted resources, to improve efficiency and a success rate of establishing the PCS link.

For example, in a layer-3 UE-to-network relay communication service scenario or a layer-3 UE-to-network relay communication service using an N3IWF for access, a relay terminal device needs to be responsible for establishing a PDU session for a remote terminal device. If the first PCS key is obtained in the control plane manner, the relay terminal device needs to perform additional control plane signaling exchange with the network, processing burden and processing logic of the relay terminal device are increased. Therefore, in consideration of consistency of processing manners, the first terminal device determines to obtain the first PCS key in the user plane manner, and sends the first indication information to the second terminal device. This can ensure that consistency of the processing manners in which the first terminal device and the second terminal device generate the PCS key.

For another example, in the user plane manner, the remote terminal device needs to obtain the key information from the key management network element in advance. If the remote terminal device has obtained the PCS key from the key management network element that obtains the first PCS key in the user plane manner, and if the first PCS key is obtained in the control plane manner, the remote terminal device subsequently needs to continue to generate the PCS key by using another key. Consequently, processing burden, key storage burden, and processing logic of the remote terminal device are increased. In this case, the first terminal device determines to obtain the first PCS key in the user plane manner, and sends the first indication information to the second terminal device. This can ensure that consistency of the processing manners in which the first terminal device and the second terminal device generate the PCS key.

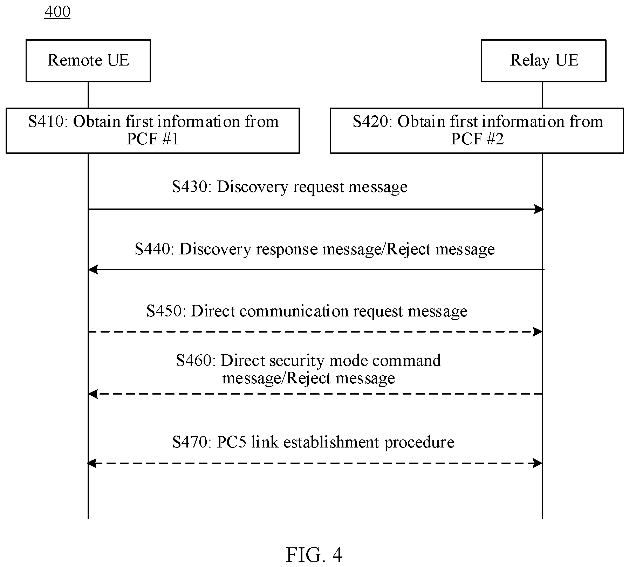

The following describes four scenarios to which the method 300 is applicable with reference to FIG. 4 to FIG. 7.

FIG. 4 is a schematic flowchart of a method for determining a key obtaining manner according to an embodiment of this application. A method 400 shown in FIG. 4 is a specific implementation of the method 300. Remote UE shown in FIG. 4 is the first terminal device in the foregoing method 300, and relay UE is the second terminal device in the foregoing method 300. The following describes steps included in the method 400.

S410: The remote UE obtains first information from PCF #1.

PCF #1 provides a service for the remote UE. For descriptions of the first information, refer to the foregoing S310. For descriptions of how the remote UE obtains the first information from PCF #1, refer to the following method 800.

S420: The relay UE obtains second information from PCF #2.

PCF #2 provides a service for the relay UE. For descriptions of the second information, refer to the foregoing S320. For descriptions of how the relay UE obtains the second information from PCF #2, refer to the following method 800.

It should be noted that PCF #1 and PCF #2 may be a same PCF network element, or may be different PCF network elements. When the remote UE and the relay UE have a same home PLMN, PCF #1 and PCF #2 are a same PCF network element. When the remote UE and the relay UE have different home PLMNs, PCF #1 and PCF #2 are different PCF network elements.

S430: The remote UE sends a discovery request message (an example of the first message) to the relay UE.

If the remote UE determines, based on the first information, that a first PCS key can be obtained in a control plane manner and a user plane manner, the remote UE determines, depending on whether a preset condition is met, whether to obtain the first PCS key in the control plane manner. If the preset condition is met, the remote UE determines to obtain the first PCS key in the control plane manner; or if none of the preset conditions is met, the remote UE obtains the first PCS key in the control plane manner or the user plane manner. The first PCS key is a key used for a PCS link between the remote UE and the relay UE. For descriptions of the manner in which the remote UE determines, based on the first information, to obtain the first PCS key, refer to the foregoing S310. That the preset condition is met means that at least one of the preset conditions is met.

The preset condition includes one or more of the following: a first RSC used by the remote UE in a proximity direct discovery procedure corresponds to a layer-2 UE-to-network relay communication service, key information that is obtained by the remote UE from a key management network element and that is for determining the first PCS key expires, or the remote UE has not obtained the key information.

Further, if the remote UE determines to obtain the first PCS key in the control plane manner, the discovery request message sent to the relay UE includes first indication information, and the first indication information indicates to obtain the first PCS key in the control plane manner. For more descriptions of the first indication information, refer to the foregoing S310.

The discovery request message may be a discovery request message sent by discoverer (discoverer) UE in a Model B discovery model.

S440: The relay UE sends a discovery response message (an example of the response message of the first message) or a reject (reject) message (an example of the response message of the first message) to the remote UE.

If the relay UE determines, based on the second information, that the first PCS key can be obtained in the control plane manner, the relay UE sends the discovery response message to the remote UE. The discovery response message includes a second RSC used by the relay UE in a proximity direct discovery procedure. Optionally, the discovery response message further includes a second PLMN ID of a home network of the relay UE.

If the relay UE determines, based on the second information, that the first PCS key cannot be obtained in the control plane manner, the relay UE does not send the discovery response message to the remote UE, or the relay UE sends the reject message to the remote UE. Optionally, the reject message indicates that the relay UE cannot obtain the first PCS key, or the reject message indicates that the relay UE cannot obtain the first PCS key in the control plane manner.

For descriptions of the manner in which the relay UE determines, based on the second information, to obtain the first PCS key, refer to the foregoing S320.

The discovery response message may be a discovery request message sent by discoveree (discoveree) UE in the Model B discovery model.

S450: The remote UE sends a direct communication request message (an example of the first message) to the relay UE.

If the remote UE receives the discovery response message in S440, the remote UE sends a direct communication request message to the relay UE.

Optionally, if the discovery request message sent by the remote UE to the relay UE in S430 does not include the first indication information, before the remote UE sends the direct communication request message to the relay UE, the remote UE determines, depending on whether the second RSC corresponds to the layer-2 UE-to-network relay communication service, whether to obtain the first PCS key in the control plane manner. If the second RSC corresponds to the layer-2 UE-to-network relay communication service, the remote UE determines to obtain the first PCS key in the control plane manner, and carries the first indication information in the direct communication request message.

Optionally, if the discovery response message includes the second PLMN ID, the remote UE may further determine, depending on whether a first PLMN ID of a home network of the remote UE is consistent with the second PLMN ID, whether to obtain the first PCS key in the control plane manner. If the first PLMN ID is inconsistent with the second PLMN ID, the remote UE determines to obtain the first PCS key in the control plane manner, and carries the first indication information in the direct communication request message.

Optionally, if the discovery response message includes the second PLMN ID, the remote UE may further determine, depending on whether the key information that is obtained from the key management network element corresponding to the second PLMN ID and that is for determining the first PCS key expires and/or whether the remote UE has obtained the key information from the key management network element corresponding to the second PLMN, whether to obtain the first PCS key in the control plane manner. If the key information that is obtained by the remote UE from the key management network element corresponding to the second PLMN ID and that is for determining the first PCS key expires, or the remote UE has not obtained the key information from the key management network element corresponding to the second PLMN, the remote UE determines to obtain the first PCS key in the control plane manner, and carries the first indication information in the direct communication request message. For more descriptions of the first indication information, refer to the foregoing S310.

The direct communication request may be a DCR message for initiating establishment of the PCS link.

S460: The relay UE sends a direct security mode command message (an example of the response message of the first message) or a reject message to the remote UE.

If the direct communication request message includes the first indication information, when the relay UE determines, based on the second information, that the first PCS key can be obtained in the control plane manner, the relay UE sends the direct connection mode security command message to the remote UE; or if the relay UE determines, based on the second information, that the first PCS key cannot be obtained in the control plane manner, the relay UE does not send the direct security mode command message to the remote UE, or the relay UE sends the reject message to the remote UE.

The direct security mode command may be a direct security mode command message in a PCS link establishment process.

S470: The remote UE and the relay UE continue to perform the PCS link establishment procedure. If the relay UE sends the direct security mode command message to the remote UE, the remote UE and the relay UE continue to perform the PCS link establishment procedure.

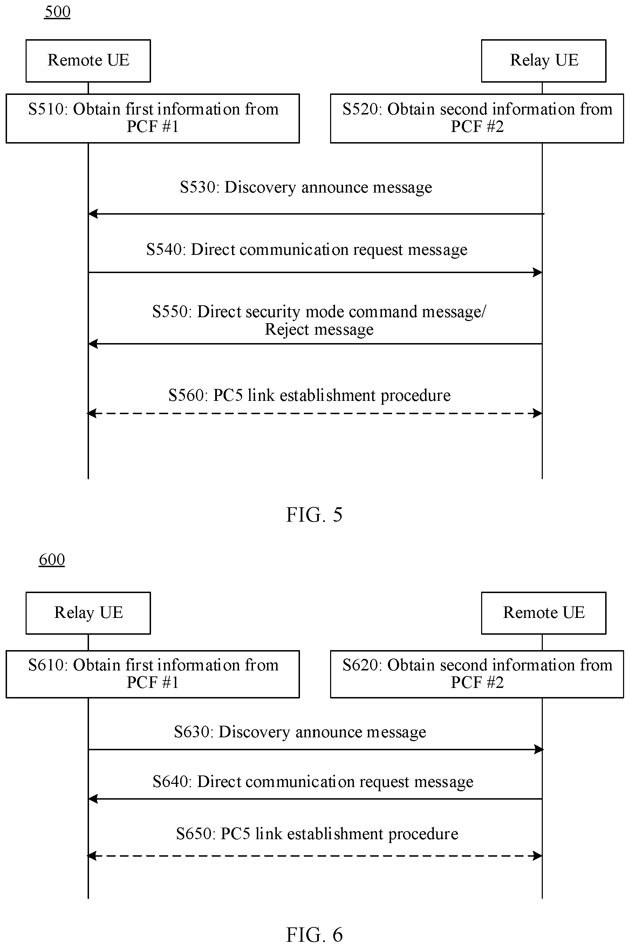

FIG. 5 is a schematic flowchart of a method for determining a key obtaining manner according to an embodiment of this application. A method 500 shown in FIG. 5 is a specific implementation of the method 300. Remote UE shown in FIG. 5 is the first terminal device in the foregoing method 300, and relay UE is the second terminal device in the foregoing method 300. The following describes steps included in the method 500.

S510 and S520 are the same as S410 and S420 in the method 400.

S530: The relay UE sends a discovery announce message (an example of the third message) to the remote UE.

The discovery announce message includes a second RSC used by the relay UE in a proximity direct discovery procedure. Optionally, the discovery announce message further includes a second PLMN ID of a home network of the relay UE.

The discovery request message may be a discovery announcing message sent by announcing (announcing) UE in a Model A discovery model.

S540: The remote UE sends a direct communication request message (an example of the first message) to the relay UE.

If the remote UE determines, based on the discovery announce message, that the relay UE can provide a first service required by the remote UE, the remote UE sends the direct communication request message to the relay UE. Before the remote UE sends the direct communication request message to the relay UE, if the remote UE determines, based on the first information, that a first PCS key can be obtained in a user plane manner and a control plane manner, the remote UE determines, depending on whether a preset condition is met, whether to obtain the first PCS key in the control plane manner. If the preset condition is met, the remote UE determines to obtain the first PCS key in the control plane manner; or if none of the preset conditions is met, the remote UE determines to obtain the first PCS key in the control plane manner or the user plane manner. The first PCS key is a key used for a PCS link between the remote UE and the relay UE. For descriptions of the manner in which the remote UE determines, based on the first information, to obtain the first PCS key, refer to the foregoing S310. That the preset condition is met means that at least one of the preset conditions is met.

The preset condition includes one or more of the following: a first RSC used by the remote UE in a proximity direct discovery procedure corresponds to a layer-2 UE-to-network relay communication service, the second RSC corresponds to the layer-2 UE-to-network relay communication service, key information that is obtained by the remote UE from a key management network element and that is for determining the first PCS key expires, or the remote UE has not obtained the key information.

Optionally, if the discovery response message includes the second PLMN ID, the remote UE may further determine, based on one or more of the following preset conditions, whether to obtain the first PCS key in the control plane manner: key information that is obtained by the remote UE from a key management network element corresponding to a first PLMN ID of a home network of the remote UE and that is for determining the first PCS key expires, key information obtained by the remote UE from a key management network element corresponding to the second PLMN ID expires, the first terminal device has not obtained key information from the key management network element corresponding to the first PLMN ID or the second PLMN ID, or the first PLMN ID is inconsistent with the second PLMN ID.

Further, if the remote UE determines to obtain the first PCS key in the control plane manner, the direct communication request message sent to the relay UE includes first indication information, and the first indication information indicates to obtain the first PCS key in the control plane manner. For more descriptions of the first indication information, refer to the foregoing S310.

The direct communication request may be a DCR message for initiating establishment of the PCS link.

S550: The relay UE sends a direct security mode command message (an example of the response message of the first message) or a reject message (an example of the response message of the first message) to the remote UE.

If the relay UE determines, based on the second information, that the first PCS key can be obtained in the control plane manner, the relay UE sends the direct security mode command message to the remote UE.

If the relay UE determines, based on the second information, that the first PCS key cannot be obtained in the control plane manner, the relay UE does not send the direct security mode command message to the remote UE, or the relay UE sends the reject message to the remote UE. Optionally, the reject message indicates that the relay UE cannot obtain the first PCS key, or the reject message indicates that the relay UE cannot obtain the first PCS key in the control plane manner.

For descriptions of the manner in which the relay UE determines, based on the second information, to obtain the first PCS key, refer to the foregoing S320.

The direct security mode command may be a direct security mode command message in a PCS link establishment process.

S560: The remote UE and the relay UE continue to perform the PCS link establishment procedure. If the relay UE sends the direct security mode command message to the remote UE, the remote UE and the relay UE continue to perform the PCS link establishment procedure.

FIG. 6 is a schematic flowchart of a method for determining a key obtaining manner according to an embodiment of this application. A method 600 shown in FIG. 6 is a specific implementation of the method 300. Remote UE shown in FIG. 6 is the second terminal device in the foregoing method 300, and relay UE is the first terminal device in the foregoing method 300. The following describes steps included in the method 600.

S610: The relay UE obtains first information from PCF #1.

PCF #1 provides a service for the relay UE. For descriptions of the first information, refer to the foregoing S310. For descriptions of how the relay UE obtains the first information from PCF #1, refer to the following method 800.

S620: The remote UE obtains second information from PCF #2.

PCF #2 provides a service for the remote UE. For descriptions of the second information, refer to the foregoing S320. For descriptions of how the remote UE obtains the second information from PCF #2, refer to the following method 800.

It should be noted that PCF #1 and PCF #2 may be a same PCF network element, or may be different PCF network elements. When the remote UE and the relay UE have a same home PLMN, PCF #1 and PCF #2 are a same PCF network element. When the remote UE and the relay UE have different home PLMNs, PCF #1 and PCF #2 are different PCF network elements.

S630: The relay UE sends a discovery announce message (an example of the first message) to the remote UE.

If the relay UE determines, based on the first information, that a first PCS key can be obtained in a control plane manner and a user plane manner, the relay UE determines, depending on whether a preset condition is met, whether to obtain the first PCS key in the control plane manner. If the preset condition is met, the relay UE determines to obtain the first PCS key in the control plane manner; or if none of the preset conditions is met, the relay UE obtains the first PCS key in the control plane manner or the user plane manner. The first PCS key is a key used for a PCS link between the remote UE and the relay UE. For descriptions of the manner in which the relay UE determines, based on the first information, to obtain the first PCS key, refer to the foregoing S310. That the preset condition is met means that at least one of the preset conditions is met.

The preset condition includes: a first RSC used by the relay UE in a proximity direct discovery procedure corresponds to a layer-2 UE-to-network relay communication service.

Further, if the relay UE determines to obtain the first PCS key in the control plane manner, the discovery announce message sent to the remote UE includes first indication information, and the first indication information indicates to obtain the first PCS key in the control plane manner. For more descriptions of the first indication information, refer to the foregoing S310.

The discovery request message may be a discovery announcing message sent by announcing (announcing) UE in a Model A discovery model.

S540: The remote UE sends a direct communication request message (an example of the response message of the first message) to the relay UE.

If the remote UE determines, based on the discovery announce message, that the relay UE can provide a first relay service required by the remote UE, and the remote UE determines, based on the second information, that the first PCS key can be obtained in the control plane manner, the remote UE sends the direct communication request message to the relay UE.

If the remote UE determines, based on the discovery announce message, that the relay UE can provide a first relay service required by the remote UE, but the remote UE determines, based on the second information, that the first PCS key cannot be obtained in the control plane manner, the remote UE does not send the direct communication request message to the relay UE.

For descriptions of the manner in which the remote UE determines, based on the second information, to obtain the first PCS key, refer to the foregoing S320.

The direct communication request message may be a DCR message for initiating establishment of the PCS link.

S650: The remote UE and the relay UE continue to perform the PCS link establishment procedure. If the remote UE sends the direct communication request message to the relay UE, the remote UE and the relay UE continue to perform the PCS link establishment procedure.

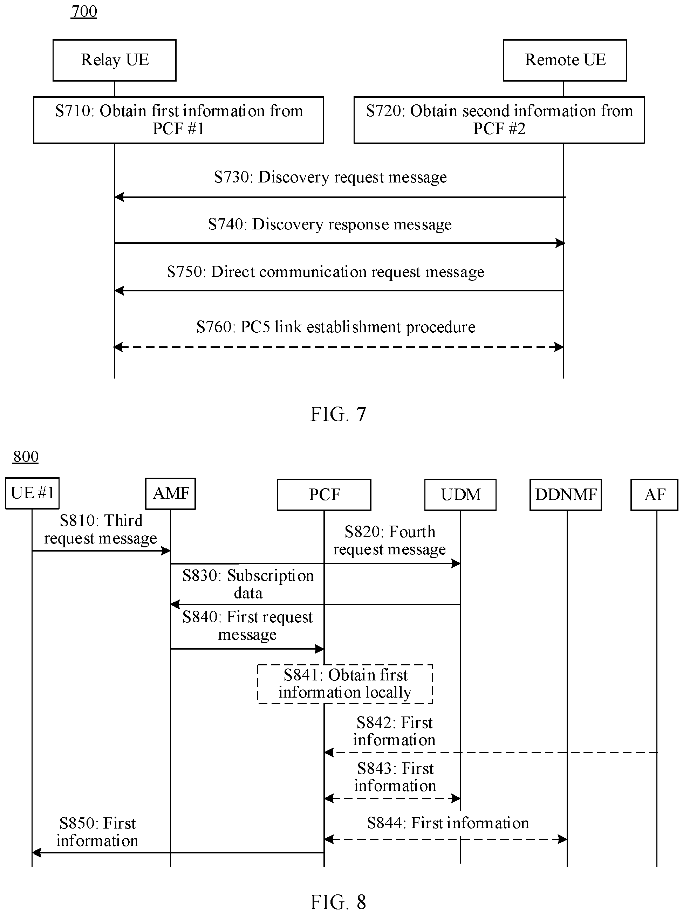

FIG. 7 is a schematic flowchart of a method for determining a key obtaining manner according to an embodiment of this application. A method 700 shown in FIG. 7 is a specific implementation of the method 300. Remote UE shown in FIG. 7 is the second terminal device in the foregoing method 300, and relay UE is the first terminal device in the foregoing method 300. The following describes steps included in the method 700.

S710 and S720 are the same as S610 and S620 in the method 600.

S730: The remote UE sends a discovery request message (an example of the third message) to the relay UE.

The discovery request message includes a second RSC used by the remote UE in a proximity direct discovery procedure. Optionally, the discovery request message further includes a second PLMN ID of a home network of the remote UE.

The discovery request message may be a discovery request message sent by discoverer (discoverer) UE in a Model B discovery model.

S740: The relay UE sends a discovery response message (an example of the first message) to the remote UE.

If the relay UE determines, based on the discovery request message, that the relay UE can provide a first relay service for the remote UE, the relay UE sends the discovery response message to the remote UE.

Before the relay UE sends the discovery response message to the remote UE, if the relay UE determines, based on the first information, that a first PCS key can be obtained in a control plane manner and a user plane manner, the relay UE determines, depending on whether a preset condition is met, whether to obtain the first PCS key in the control plane manner. If the preset condition is met, the relay UE determines to obtain the first PCS key in the control plane manner; or if none of the preset conditions is met, the relay UE determines to obtain the first PCS key in the control plane manner or the user plane manner. The first PCS key is a key used for a PCS link between the remote UE and the relay UE. For descriptions of the manner in which the relay UE determines, based on the first information, to obtain the first PCS key, refer to the foregoing S310. That the preset condition is met means that at least one of the preset conditions is met.

The preset condition includes one or more of the following: a first RSC used by the relay UE in a proximity direct discovery procedure corresponds to a layer-2 UE-to-network relay communication service, and the second RSC corresponds to the layer-2 UE-to-network relay communication service.

Optionally, if the discovery request message includes the second PLMN ID, the relay UE may further determine, depending on whether a first PLMN ID of a home network of the relay UE is consistent with the second PLMN ID, whether to obtain the first PCS key in the control plane manner.

Further, if the relay UE determines to obtain the first PCS key in the control plane manner, the discovery response message sent to the remote UE includes first indication information, and the first indication information indicates to obtain the first PCS key in the control plane manner. For more descriptions of the first indication information, refer to the foregoing S310.

The discovery response message may be a discovery request message sent by discoveree (discoveree) UE in the Model B discovery model.

S750: The remote UE sends a direct communication request message (an example of the response message of the first message) to the relay UE.

If the remote UE determines, based on the second information, that the first PCS key can be obtained in the control plane manner, the remote UE sends the direct communication request message to the relay UE.

If the remote UE determines, based on the second information, that the first PCS key cannot be obtained in the control plane manner, the remote UE does not send the direct communication request message to the relay UE.

For descriptions of the manner in which the remote UE determines, based on the second information, to obtain the first PCS key, refer to the foregoing S320.

The direct communication request may be a DCR message for initiating establishment of the PCS link.

S760: The remote UE and the relay UE continue to perform the PCS link establishment procedure. If the remote UE sends the direct communication request message to the relay UE, the remote UE and the relay UE continue to perform the PCS link establishment procedure.

With reference to FIG. 8, the following describes a manner in which the first terminal device obtains the first information from the PCF in the foregoing S310. It should be noted that a manner in which the second terminal device obtains the second information from the PCF in the foregoing S320 is the same as the manner in which the first terminal device obtains the first information. For brevity, details are not described again in this embodiment of this application.

FIG. 8 is a schematic flowchart of a communication method according to an embodiment of this application. As shown in FIG. 8, the method 800 may include S810 to S850. The following describes the steps in detail.

S810: A first terminal device (denoted as UE #1) sends a third request message to an access and mobility management network element (denoted as an AMF).

The third request message is for requesting proximity-based service policy configuration, the third request message includes relay capability information of UE #1, and the relay capability information indicates that UE #1 supports use of a UE-to-network relay communication service. For example, the third request message is a 5G ProSe policy configuration request (5G ProSe provisioning request) message, and the 5G ProSe policy configuration request message includes a 5G ProSe UE-to-network relay communication capability.

It should be noted that, that UE #1 supports use of the UE-to-network relay communication service is specifically that UE #1 has a capability of supporting use of the UE-to-network relay communication service or a capability of providing a network relay service for the UE-to-network relay communication service.

Optionally, if UE #1 locally stores first information, UE #1 may carry the first information in the third request message. The first information indicates to obtain a PCS key in a control plane manner and/or a user plane manner, or the first information may include one or more of the following: a first mapping relationship and a second mapping relationship.

Optionally, a service provider of the relay service may alternatively pre-configure the first information in UE #1 by using a carrier of a home network of UE #1.

Optionally, an AS or an AF of the relay service may alternatively pre-configure the first information in UE #1 by using the user plane.

It should be additionally noted that, in this embodiment of this application, the first mapping relationship may include one or more of the following mapping relationships: a mapping relationship between second indication information and a first PLMN ID, a mapping relationship between the second indication information and a second PLMN ID, a mapping relationship between fifth indication information and the first PLMN ID, and a mapping relationship between the fifth indication information and the second PLMN ID. The first PLMN ID is a PLMN ID of the home network of UE #1, and the second PLMN ID is a PLMN ID of a home network of a second terminal device (denoted as UE #2). The second mapping relationship includes a mapping relationship between the second indication information or the fifth indication information and identifier information of the relay service. The second indication information indicates to obtain the PCS key in the control plane manner and the user plane manner, and the fifth indication information indicates to obtain the PCS key in the control plane manner or the user plane manner. It should be noted that the first mapping relationship may indicate a mapping relationship between the second indication information or the fifth indication information and the PLMN in which the terminal is located, and the first mapping relationship may further indicate a mapping relationship between the second indication information or the fifth indication information and a PLMN in which a key management network element is located.

S820: The AMF sends a fourth request message to a unified data management network element (denoted as a UDM).

The fourth request message is for requesting subscription data of UE #1. For example, the subscription data of the UE #1 is ProSe subscription information, and the ProSe subscription information is for determining that UE #1 can use the UE-to-network relay communication service, or the ProSe subscription information is for determining that UE #1 can provide a network relay service for the UE-to-network relay communication service.

S830: The AMF receives the subscription data from the UDM.

Optionally, the AMF further receives the first information from the UDM. For descriptions of the first information, refer to the foregoing S310. For brevity, details are not described herein.

It should be noted that, if the AMF further receives the first information from the UDM, the UDM stores the first information, and the first information indicates to obtain the PCS key in the control plane manner and/or the user plane manner, or the first information may include one or more of the following: the first mapping relationship and the second mapping relationship. If the first information indicates to obtain the PCS key in the control plane manner and/or the user plane manner, the first information stored in the UDM is preconfigured by the carrier of the home network of UE #1. If the first information includes the first mapping relationship, the carrier of the home network of UE #1 preconfigures a correspondence between indication information and a PLMN ID in the UDM, and the correspondence between the indication information and the PLMN ID may be a correspondence between the PLMN ID and indication information that indicates the manner of obtaining the PCS key and that is in all PLMNs that have a roaming agreement with the carrier of the home network of UE #1; if the first information includes the second mapping relationship, service providers of different relay services pre-configure correspondences between the indication information and identifier information of the relay services in the UDM of the home PLMN of UE #1 by using the carrier of the home network of UE #1.

Optionally, the service provider of the relay service may configure, in the UDM of the home PLMN of UE #1 by using the carrier of the home network of the UE #1, the first mapping relationship or the first information that indicates to obtain the PCS key in the control plane manner and/or the user plane manner.

Optionally, the carrier of the home network of UE #1 may alternatively pre-configure the second mapping relationship in the UDM of the home PLMN of UE #1.

It should be noted that, if UE #2 performs this procedure, the UDM stores second information, and the second information indicates to obtain the PCS key in the control plane manner and/or the user plane manner, or the second information may include one or more of the following: third mapping relationship and fourth mapping relationship. It should be noted that, in this embodiment of this application, the third mapping relationship may include one or more of the following mapping relationships: a mapping relationship between third indication information and the first PLMN ID, a mapping relationship between the third indication information and the second PLMN ID, a mapping relationship between sixth indication information and the first PLMN ID, and a mapping relationship between the sixth indication information and the second PLMN ID. The first PLMN ID is the PLMN ID of the home network of UE #1, and the second PLMN ID is the PLMN ID of the home network of UE #2. The fourth mapping relationship includes a mapping relationship between the third indication information or the sixth indication information and the identifier information of the relay service. The third mapping relationship may indicate a mapping relationship between the third indication information or the sixth indication information and the PLMN in which the terminal is located, and the third mapping relationship may further indicate a mapping relationship between the third indication information or the sixth indication information and the PLMN in which the key management network element is located. The third indication information indicates to obtain the PCS key in the control plane manner and/or the user plane manner, and the sixth indication information indicates to obtain the PCS key in the control plane manner or the user plane manner. For a specific step in which UE#2, the AMF, the PCF, and the UDM obtain the second information, refer to descriptions in which UE#1, the AMF, the PCF, and the UDM obtain the first information. Details are not described again.

S840: The AMF sends a first request message to a policy control function network element (denoted as a PCF).

The first request message is for requesting a ProSe parameter of UE #1, and the ProSe parameter includes a ProSe discovery parameter and a PCS communication parameter that are related to UE-to-network relay communication.

Specifically, after receiving the subscription data from the UDM, if the AMF determines, based on the relay capability information of UE #1 and the subscription data of UE #1 that are included in the third request message, that UE #1 can use the UE-to-network relay communication service or can provide the network relay service for the UE-to-network relay communication service, the AMF sends the first request message to the PCF based on the received third request message. Optionally, the first request message further includes the relay capability information of UE #1. Optionally, if the AMF obtains the first information from the UDM, the first request message may further include the first information.

Optionally, if the UE #1 carries the first information in the third request message, the AMF carries the first information in the first request message.

Optionally, the AMF may not obtain the first information from the UDM, but locally obtains the first information. It should be noted that, if the first information indicates to obtain the PCS key in the control plane manner and/or the user plane manner, the first information locally stored in the AMF is preconfigured by the carrier of the home network of UE #1. If the first information includes the first mapping relationship, the carrier of the home network of UE #1 preconfigures a correspondence between indication information and a PLMN ID in the AMF, and the correspondence between the indication information and the PLMN ID may be a correspondence between the PLMN ID and indication information that indicates the manner of obtaining the PCS key and that is in all PLMNs that have a roaming agreement with the carrier of the home network of UE #1; if the first information includes the second mapping relationship, service providers of different relay services pre-configure correspondences between the indication information and identifier information of the relay services in the AMF of the home PLMN of UE #1 by using the carrier of the home network of UE #1.

S850: The PCF sends the ProSe parameter to UE #1.

The ProSe parameter includes the first information. It may be understood that the ProSe parameter further includes RSC information used by UE #1 in the proximity direct discovery procedure and another parameter used in the proximity direct discovery procedure.

In a possible implementation, once receiving the first request message from the AMF, the PCF may determine that UE #1 can use the UE-to-network relay communication service, or determine that UE #1 can provide the network relay service for the UE-to-network relay communication service. Further, the PCF carries the first information in the ProSe parameter and sends the ProSe parameter to UE #1.

In another possible implementation, if the first request message includes the relay capability information of UE #1, the PCF determines, based on the relay capability information of UE #1, that UE #1 can use the UE-to-network relay communication service, or determines that UE #1 can provide the network relay service for the UE-to-network relay communication service. Further, the PCF carries the first information in the ProSe parameter and sends the ProSe parameter to UE #1.

A manner in which the PCF obtains the first information is not limited in this embodiment of this application.

In an example, the PCF obtains the first information from the AMF. As described above, when the AMF obtains the subscription data of UE #1 from the UDM, if the UDM preconfigures the first information, the UDM may send the first information to the AMF. Further, the AMF may carry the first information in the first request message and send the first request message to the PCF. Optionally, if the AMF carries the first information in the first request message, the PCF obtains the first information from the first request message, and determines third information based on the first information. The third information is one of the following: obtaining the PC5 key in the control plane manner or obtaining the PC5 key in the user plane manner.

In another example, the method 800 further includes S841: The PCF obtains the first information locally. It should be noted that, if the first information indicates to obtain the PC5 key in the control plane manner and/or the user plane manner, the first information locally stored in the PCF is preconfigured by the carrier of the home network of UE #1. If the first information includes the first mapping relationship, the carrier of the home network of UE #1 preconfigures a correspondence between indication information and a PLMN ID in the PCF, and the correspondence between the indication information and the PLMN ID may be a correspondence between the PLMN ID and indication information that indicates the manner of obtaining the PC5 key and that is in all PLMNs that have a roaming agreement with the carrier of the home network of UE #1; if the first information includes the second mapping relationship, service providers of different relay services pre-configure correspondences between the indication information and identifier information of the relay services in the PCF of the home PLMN of UE #1 by using the carrier of the home network of UE #1.

Optionally, if the first information includes the second mapping relationship, the method 800 further includes S842: The AF sends the first information to the PCF. Specifically, in S842, AFs corresponding to different relay services may send correspondences between identifier information of the relay services and indication information to the PCF at any time by using an NEF network element. Correspondingly, after receiving the correspondence between the indication information and the identifier information of the relay service from the AF, the PCF locally stores the correspondence.

Optionally, the service provider of the relay service or the AF may configure, in the PCF of the home PLMN of UE #1 by using the carrier of the home network of the UE #1, the first mapping relationship or the first information that indicates to obtain the PC5 key in the control plane manner and/or the user plane manner.

In still another example, the method 800 further includes S843: The PCF obtains the first information from the UDM. Specifically, in S843, the PCF sends a second request message to the UDM, where the second request message is for requesting the first information. Correspondingly, the UDM sends the first information to the PCF based on the second request message.

In yet another example, the method 800 further includes S844: The PCF obtains the first information from a DDNMF. Specifically, in S844, the PCF sends a second request message to the DDNMF, where the second request message is for requesting the first information. Correspondingly, the DDNMF sends the first information to the PCF based on the second request message.

It should be noted that, if the PCF receives the first information from the DDNMF, the DDNMF stores the first information, and the first information indicates to obtain the PC5 key in the control plane manner and/or the user plane manner, or the first information may include one or more of the following: the first mapping relationship and the second mapping relationship. If the first information indicates to obtain the PC5 key in the control plane manner and/or the user plane manner, the first information locally stored in the DDNMF is preconfigured by the carrier of the home network of UE #1. If the first information includes the first mapping relationship, the carrier of the home network of UE #1 preconfigures a correspondence between indication information and a PLMN ID in the DDNMF, and the correspondence between the indication information and the PLMN ID may be a correspondence between the PLMN ID and indication information that indicates the manner of obtaining the PC5 key and that is in all PLMNs that have a roaming agreement with the carrier of the home network of UE #1; if the first information includes the second mapping relationship, service providers of different relay services pre-configure correspondences between the indication information and identifier information of the relay services in the DDNMF by using the carrier of the home network of UE #1.

Optionally, if the first information includes the second mapping relationship, and the DDNMF does not locally pre-configure the first information, the DDNMF may obtain, from servers of different relay services by using the user plane, indication information corresponding to identifier information of the different relay services, and locally store a correspondence between the relay service identifier information and the indication information.

Optionally, the service provider of the relay service may configure, in the DDNMF of the home PLMN of UE #1 by using the carrier of the home network of the UE #1, the first mapping relationship or the first information that indicates to obtain the PC5 key in the control plane manner and/or the user plane manner.

It may be understood that, in S850, the PCF sends the ProSe parameter to the AMF, and then the AMF forwards the ProSe parameter to UE #1.

Optionally, if the AMF obtains the first information from the UDM, and the ProSe parameter received by the AMF from the PCF does not include the first information, the AMF sends the first information and the ProSe parameter to UE #1.

Optionally, if the PCF determines the third information in S850, the PCF sends the third information to UE #1 by using the AMF, and UE #1 directly determines, by using the third information, the manner of obtaining the first PC5 key.

In this embodiment of this application, if UE #1 can use the UE-to-network relay communication service, or can provide the network relay service for the UE-to-network relay communication service, UE #1 may obtain, from the network side (the PCF or the AMF), the first information for determining the first PC5 key, so that UE #1 determines, based on the first information, the manner of obtaining the first PC5 key. This helps UE #1 successfully establish the PC5 link.

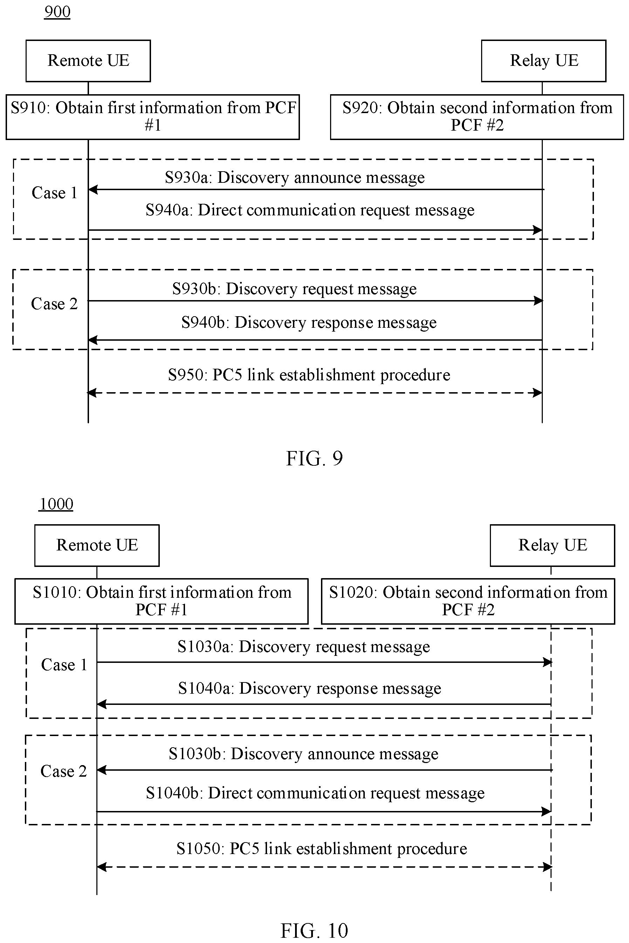

The foregoing embodiment describes how to determine the manner of obtaining the first PC5 key when the remote UE can obtain the first PC5 key in the control plane manner and the user plane manner, and further describes how to determine the manner of obtaining the first PC5 key when the relay UE can obtain the first PC5 key in the control plane manner and the user plane manner. With reference to FIG. 9, the following describes how relay UE negotiates with remote UE to obtain a first PC5 key when the relay UE can obtain the first PC5 key only in a control plane manner or only in a user plane manner. With reference to FIG. 10, the following describes how remote UE negotiates with relay UE to obtain a first PC5 key when the remote UE can obtain the first PC5 key only in a control plane manner or only in a user plane manner.

FIG. 9 is a schematic flowchart of determining a key obtaining manner according to an embodiment of this application. As shown in FIG. 9, the method 900 may include S910 to S950. The following describes the steps in detail.

S910: Remote UE obtains first information from PCF #1.

PCF #1 provides a service for the remote UE.

For example, the first information indicates to obtain a PC5 key in a control plane manner or a user plane manner. It should be noted that the first information corresponds to a PLMN ID of a home network of the remote UE, but the first information may not indicate a correspondence between the first information and the PLMN ID of the home network of the remote UE, that is, the first information does not include identifier information that may indicate the PLMN ID of the home network of the remote UE. For example, the first information may be indication information obtained by a network element and/or UE in a PLMN corresponding to the PLMN ID of the home network of the remote UE.

For another example, the first information includes a first mapping relationship, the first mapping relationship includes a correspondence between at least one piece of indication information and at least one PLMN ID, each of the at least one piece of indication information indicates to obtain the PC5 key in the control plane manner and/or the control plane manner, and the at least one PLMN ID includes the PLMN ID of the home network of the remote UE and/or a PLMN ID of a home network of relay UE.

It should be noted that the first mapping relationship may indicate a correspondence between at least one piece of indication information and the PLMN in which the terminal is located, and the first mapping relationship may further indicate a correspondence between the at least one piece of indication information and a PLMN in which a key management network element is located. For still another example, the second information includes a fourth mapping relationship, the fourth mapping relationship includes a correspondence between at least one piece of indication information and identifier information of at least one relay service, each of the at least one piece of indication information indicates to obtain the PC5 key in the control plane manner and/or the user plane manner, the at least one relay service includes a first relay service, and the first relay service corresponds to a PC5 link between the first terminal device and the second terminal device, that is, the PC5 link is established for the first relay service.

S920: The relay UE obtains second information from PCF #2.

PCF #2 provides a service for the relay UE.

For example, the second information indicates to obtain the PC5 key in the control plane manner or the user plane manner. It should be noted that the second information corresponds to the PLMN ID of the home network of the relay UE, but the second information may not indicate a correspondence between the second information and the PLMN ID of the home network of the relay UE, that is, the second information does not include identifier information that may indicate the PLMN ID of the home network of the relay UE. For example, the second information may be indication information obtained by a network element and/or UE in a PLMN corresponding to the PLMN ID of the home network of the relay UE.

For another example, the second information includes a third mapping relationship, the third mapping relationship includes a correspondence between at least one piece of indication information and at least one PLMN ID, each of the at least one piece of indication information indicates to obtain the PC5 key in the control plane manner and/or the user plane manner, and the at least one PLMN ID includes the PLMN ID of the home network of the remote UE and/or the PLMN ID of the home network of the relay UE.

It should be noted that the third mapping relationship may indicate a correspondence between at least one piece of indication information and the PLMN in which the terminal is located, and the third mapping relationship may further indicate a correspondence between the at least one piece of indication information and a PLMN in which a key management network element is located. For still another example, the second information includes a fourth mapping relationship, the fourth mapping relationship includes a correspondence between at least one piece of indication information and identifier information of at least one relay service, each of the at least one piece of indication information indicates to obtain the PC5 key in the control plane manner and/or the user plane manner, the at least one relay service includes a first relay service, and the first relay service corresponds to the PC5 link between the first terminal device and the second terminal device, that is, the PC5 link is established for the first relay service.

It should be noted that PCF #1 and PCF #2 may be a same PCF network element, or may be different PCF network elements. When the remote UE and the relay UE have a same home PLMN, PCF #1 and PCF #2 are a same PCF network element. When the remote UE and the relay UE have different home PLMNs, PCF #1 and PCF #2 are different PCF network elements.

Case 1: In the method 900, S930a and S940a are performed.

S930a: The relay UE sends a discovery announce message to the remote UE.

The discovery announce message includes seventh indication information, and the seventh indication information indicates, to the remote UE, a manner that is determined by the relay UE and that is of obtaining a first PC5 key.

Specifically, the relay UE determines, based on the second information, the manner of obtaining the first PC5 key.

In an example, if the second information indicates to obtain the PC5 key in the control plane manner or the user plane manner, the relay UE determines, based on the second information, the manner of obtaining the first PC5 key. For example, if the second information indicates to obtain the PC5 key in the control plane manner, the relay UE determines to obtain the first PC5 key in the control plane manner; or if the second information indicates to obtain the PC5 key in the user plane manner, the relay UE determines to obtain the first PC5 key in the user plane manner.

In another example, if the second information includes the third mapping relationship, the relay UE determines, based on sixth indication information, the manner of obtaining the first PC5 key, where the sixth indication information indicates to obtain the PC5 key in the control plane manner or the user plane manner, and the sixth indication information is corresponding to the PLMN ID of the home network of the remote UE or the PLMN ID of the home network of the relay UE.

In another example, if the second information includes the fourth mapping relationship, the relay UE determines, based on sixth indication information, the manner of obtaining the first PC5 key, where the sixth indication information indicates to obtain the PC5 key in the control plane manner or the user plane manner, and the sixth indication information is corresponding to the first relay service related to the RSC in the discovery announce message.

A specific form of the seventh indication information is not limited in this embodiment of this application.

In an example, the seventh indication information is equivalent to the sixth indication information or the second information, that is, the relay UE carries the sixth indication information or the second information in the discovery announce message and sends the discovery announce message to the remote UE. The second information indicates to obtain the PC5 key in the control plane manner or the user plane manner.

In an example, the relay UE determines, based on the second information, the manner of obtaining the first PC5 key, and determines the seventh indication information based on the manner of obtaining the first PC5 key. To be specific, when it is determined to obtain the first PC5 key in the control plane manner, the seventh indication information is obtaining the PC5 key in the control plane manner; or when it is determined to obtain the first PC5 key in the user plane manner, the seventh indication information is obtaining the PC5 key in the user plane manner.

In another example, the seventh indication information is a PLMN ID corresponding to the sixth indication information. For example, if the sixth indication information corresponds to the PLMN ID of the home network of the remote UE, the seventh indication information is the PLMN ID of the home network of the remote UE; or if the sixth indication information corresponds to the PLMN ID of the home network of the relay UE, the seventh indication information is the PLMN ID of the home network of the relay UE.

In another example, the seventh indication information is identifier information of a first relay service corresponding to the sixth indication information. For example, if the sixth indication information corresponds to the first relay service, the seventh indication information is identifier information of the first relay service, and the identifier information may be an RSC or ID information of the first relay service.

In an example, when the seventh indication information is obtaining the PC5 key in the control plane manner, the seventh indication information may be represented by 00; or when the seventh indication information is obtaining the PC5 key in the user plane manner, the seventh indication information may be represented by 01. This is not limited in this embodiment of this application. It should be noted that the discovery announce message may be a discovery announcing message in a model A discovery procedure.

S940a: The remote UE sends a direct communication request message to the relay UE.

If the manner that is determined by the remote UE and that is of obtaining the first PC5 key is the same as the manner that is determined by the relay UE and that is of obtaining the first PC5 key, the remote UE sends the direct communication request message to the relay UE.

If the manner that is determined by the remote UE and that is of obtaining the first PC5 key is different from the manner that is determined by the relay UE and that is of obtaining the first PC5 key, the remote UE does not send the direct communication request message to the relay UE. Specifically, the remote UE determines, based on the first information and the seventh indication information, whether the manners that are separately determined by the remote UE and the relay UE and that are of obtaining the first PC5 key are the same.

In an example, if the first information indicates to obtain the PC5 key in the control plane manner or the user plane manner, and the seventh indication information is equivalent to the sixth indication information or the second information, the remote UE may determine, depending on whether the first information and the seventh indication information are the same, whether the manners that are separately determined by the remote UE and the relay UE and that are of obtaining the first PC5 key are the same. If the first information and the seventh indication information are the same, the remote UE determines that the manners that are separately determined by the remote UE and the relay UE and that are of obtaining the first PC5 key are the same; or if the first information and the seventh indication information are different, the remote UE determines that the manners that are separately determined by the remote UE and the relay UE and that are of obtaining the first PC5 key are different.

If the first information indicates to obtain the PC5 key in the control plane manner or the user plane manner, and the seventh indication information indicates to obtain the PC5 key in the control plane manner or the user plane manner, the remote UE may determine, based on the first information, the manner of obtaining the PC5 key, and determine, through comparison, whether the manner determined based on the first information and the manner indicated by the seventh indication information are the same. If the PC5 key obtaining manner determined based on the first information and the PC5 key obtaining manner indicated by the seventh indication information are the same, the remote UE determines that the manners that are separately determined by the remote UE and the relay UE and that are of obtaining the first PC5 key are the same; or if the PC5 key obtaining manner determined based on the first information and the PC5 key obtaining manner indicated by the seventh indication information are different, the remote UE determines that the manners that are separately determined by the remote UE and the relay UE and that are of obtaining the first PC5 key are different.

In another example, if the first information includes the first mapping relationship, and the seventh indication information is equivalent to the sixth indication information or the second information, the remote UE may determine, depending on whether fifth indication information and the seventh indication information are the same, whether the manners that are separately determined by the remote UE and the relay UE and that are of obtaining the first PC5 key are the same. The fifth indication information indicates to obtain the PC5 key in the control plane manner or the user plane manner, and the fifth indication information is corresponding to the PLMN ID of the home network of the remote UE or the PLMN ID of the home network of the relay UE.

If the first information includes the first mapping relationship, and the seventh indication information indicates to obtain the PC5 key in the control plane manner or the user plane manner, the remote UE may determine, based on the fifth indication information, the manner of obtaining the PC5 key, and determine, through comparison, whether the manner determined based on the fifth indication information and the manner indicated by the seventh indication information are the same. If the PC5 key obtaining manner determined based on the fifth indication information and the PC5 key obtaining manner indicated by the seventh indication information are the same, the remote UE determines that the manners that are separately determined by the remote UE and the relay UE and that are of obtaining the first PC5 key are the same; or if the PC5 key obtaining manner determined based on the fifth indication information and the PC5 key obtaining manner indicated by the seventh indication information are different, the remote UE determines that the manners that are separately determined by the remote UE and the relay UE and that are of obtaining the first PC5 key are different.

In another example, if the first information includes second mapping relationship, and the seventh indication information is equivalent to the sixth indication information or the second information, the remote UE may determine, depending on whether fifth indication information and the seventh indication information are the same, whether the manners that are separately determined by the remote UE and the relay UE and that are of obtaining the first PC5 key are the same. The fifth indication information indicates to obtain the PC5 key in the control plane manner or the user plane manner, and the fifth indication information is corresponding to the identifier information of the first relay service.

If the first information includes the second mapping relationship, and the seventh indication information indicates to obtain the PC5 key in the control plane manner or the user plane manner, the remote UE may determine, based on the fifth indication information, the manner of obtaining the PC5 key, and determine, through comparison, whether the manner determined based on the fifth indication information and the manner indicated by the seventh indication information are the same. If the PC5 key obtaining manner determined based on the fifth indication information and the PC5 key obtaining manner indicated by the seventh indication information are the same, the remote UE determines that the manners that are separately determined by the remote UE and the relay UE and that are of obtaining the first PC5 key are the same; or if the PC5 key obtaining manner determined based on the fifth indication information and the PC5 key obtaining manner indicated by the seventh indication information are different, the remote UE determines that the manners that are separately determined by the remote UE and the relay UE and that are of obtaining the first PC5 key are different.

In still another example, if the first information includes the first mapping relationship, and the seventh indication information is a PLMN ID, the remote UE determines, based on the seventh indication information and the first mapping relationship, the manner of obtaining the PC5 key, and determines, depending on whether the manner of obtaining the PC5 key and the manner indicated by the fifth indication information are the same, whether the manners of obtaining the first PC5 key that are separately determined by the remote UE and the relay UE are the same. If the manner that is of obtaining the PC5 key and that is determined by the remote UE based on the seventh indication information and the first mapping relationship is the same as the manner that is of obtaining the PC5 key and that is indicated by the fifth indication information, it is determined that the manners obtaining the first PC5 key by the remote UE and the relay UE are the same; otherwise, it is determined that the manners of obtaining the first PC5 key by the remote UE and the relay UE are different. The manner that is of obtaining the PC5 key and that is determined by the remote UE based on the seventh indication information and the first mapping relationship is a manner indicated by indication information corresponding to the seventh indication information in the first mapping relationship.

In yet another example, if the first information includes the second mapping relationship, and the seventh indication information is the identifier information of the first relay service, the remote UE determines, based on the seventh indication information and the second mapping relationship, the manner of obtaining the PC5 key, and determines, depending on whether the manner of obtaining the PC5 key and the manner indicated by the fifth indication information are the same, whether the manners of obtaining the first PC5 key that are separately determined by the remote UE and the relay UE are the same. If the manner that is of obtaining the PC5 key and that is determined by the remote UE based on the seventh indication information and the second mapping relationship is the same as the manner that is of obtaining the PC5 key and that is indicated by the fifth indication information, it is determined that the manners obtaining the first PC5 key by the remote UE and the relay UE are the same; otherwise, it is determined that the manners of obtaining the first PC5 key by the remote UE and the relay UE are different. The manner that is of obtaining the PC5 key and that is determined by the remote UE based on the seventh indication information and the second mapping relationship is a manner indicated by indication information corresponding to the seventh indication information in the second mapping relationship.

Case 2: In the method 900, S930b and S940b are performed.

S930b: The remote UE sends a discovery request message to the relay UE.

The discovery request message may be a discovery request message sent by discoverer (discoverer) UE in a Model B discovery model.

S940b: The relay UE sends a discovery response message to the remote UE.

If the relay UE determines, based on the discovery request message, that the relay UE can provide a first relay service for the remote UE, the relay UE sends the discovery response message to the remote UE. The discovery response message includes seventh indication information, and the seventh indication information indicates, to the remote UE, a manner that is determined by the relay UE and that is of obtaining a first PC5 key. For more descriptions about how the relay UE determines the manner of obtaining the first PC5 key and about the seventh indication information, refer to S930a.

It should be noted that the discovery response message may be a discovery response message in a model B discovery procedure.

S950: The remote UE and the relay UE continue to perform the PC5 link establishment procedure. If S930a and S940a are performed in the method 900, in S940a, the remote UE sends the direct communication request message to the relay UE, the remote UE and the relay UE continue to perform the PC5 link establishment procedure.

If S930b and S940b are performed in the method 900, after the remote UE receives the discovery response message, if the remote UE determines, based on the first information and the seventh indication information, manners that are separately determined by the remote UE and the relay UE and that are of obtaining the first PC5 key are the same, the remote UE and the relay UE perform the PC5 link establishment procedure. For how the remote UE determines, based on the first information and the seventh indication information, whether the manners that are separately determined by the remote UE and the relay UE and that are of obtaining the first PC5 key are the same, refer to the descriptions in the foregoing S940a.

In this embodiment of this application, the relay UE carries the seventh indication information in the discovery announce or discovery response message, so that the remote UE can determine, based on the seventh indication information, whether the manners that are separately determined by the relay UE and the remote UE and that are of obtaining the first PC5 key are the same. When the manners that are separately determined by the relay UE and the remote UE and that are of obtaining the first PC5 key are the same, the remote UE sends the direct communication request message to the relay UE, to avoid a PC5 link establishment failure caused by different manners that are determined by the UEs at two ends and that are of obtaining the first PC5 key. When the manners that are separately determined by the relay UE and the remote UE and that are of obtaining the first PC5 key are different, the remote UE does not send the direct communication request message to the relay UE, to reduce signaling.

FIG. 10 is a schematic flowchart of determining a key obtaining manner according to an embodiment of this application. As shown in FIG. 10, the method 1000 may include S1010 to S1050. The following describes the steps in detail.

S1010 and S1020 are the same as S910 and S920 in the method 900.

Case 1: In the method 1000, S1030a and S1040a are performed.

S1030a: The remote UE sends a discovery request message to the relay UE.

The discovery request message includes eighth indication information, and the eighth indication information indicates, to the relay UE, a manner that is determined by the remote UE and that is of obtaining a first PC5 key.

Specifically, the remote UE determines, based on the first information, the manner of obtaining the first PC5 key.

In an example, if the first information indicates to obtain the PC5 key in the control plane manner or the user plane manner, the remote UE determines, based on the first information, the manner of obtaining the first PC5 key. For example, if the first information indicates to obtain the PC5 key in the control plane manner, the remote UE determines to obtain the first PC5 key in the control plane manner; or if the first information indicates to obtain the PC5 key in the user plane manner, the remote UE determines to obtain the first PC5 key in the user plane manner.

In another example, if the first information includes the first mapping relationship, the remote UE determines, based on fifth indication information, the manner of obtaining the first PC5 key, where the fifth indication information indicates to obtain the PC5 key in the control plane manner or the user plane manner, and the fifth indication information is corresponding to the PLMN ID of the home network of the remote UE or the PLMN ID of the home network of the relay UE.

In another example, if the first information includes the second mapping relationship, the remote UE determines, based on fifth indication information, the manner of obtaining the first PC5 key, where the fifth indication information indicates to obtain the PC5 key in the control plane manner or the user plane manner, and the fifth indication information is corresponding to the first relay service related to the RSC in the discovery request message.

A specific form of the eighth indication information is not limited in this embodiment of this application.

In an example, the eighth indication information is equivalent to the fifth indication information or the first information, that is, the remote UE carries the fifth indication information or the first information in the discovery request message and sends the discovery request message to the relay UE. The first information indicates to obtain the PC5 key in the control plane manner or the user plane manner.

In an example, the remote UE determines, based on the first information, the manner of obtaining the first PC5 key, and determines the eighth indication information based on the manner of obtaining the first PC5 key. To be specific, when it is determined to obtain the first PC5 key in the control plane manner, the eighth indication information is obtaining the PC5 key in the control plane manner; or when it is determined to obtain the first PC5 key in the user plane manner, the eighth indication information is obtaining the PC5 key in the user plane manner.

In another example, the eighth indication information is a PLMN ID corresponding to the fifth indication information. For example, if the fifth indication information corresponds to the PLMN ID of the home network of the remote UE, the eighth indication information is the PLMN ID of the home network of the remote UE; or if the fifth indication information corresponds to the PLMN ID of the home network of the relay UE, the eighth indication information is the PLMN ID of the home network of the relay UE.

In another example, the eighth indication information is identifier information of a first relay service corresponding to the fifth indication information. For example, if the fifth indication information corresponds to the first relay service, the eighth indication information is the identifier information of the first relay service, and the identifier information may be an RSC or ID information of the first relay service.

In an example, when the eighth indication information is obtaining the PC5 key in the control plane manner, the eighth indication information may be represented by 00; or when the eighth indication information is obtaining the PC5 key in the user plane manner, the eighth indication information may be represented by 01. This is not limited in this embodiment of this application. It should be noted that the discovery request message may be a discovery request message in a model B discovery procedure.

S1040a: The relay UE sends a discovery response message to the remote UE.

If the manner that is determined by the relay UE and that is of obtaining the first PC5 key is the same as the manner that is determined by the remote UE and that is of obtaining the first PC5 key, the relay UE sends the discovery response message to the remote UE.

If the manner that is determined by the relay UE and that is of obtaining the first PC5 key is different from the manner that is determined by the remote UE and that is of obtaining the first PC5 key, the relay UE does not send the discovery response message to the remote UE, or sends a reject message to the remote UE.

Specifically, the relay UE determines, based on the second information and the eighth indication information, whether the manners that are separately determined by the remote UE and the relay UE and that are of obtaining the first PC5 key are the same.

In an example, if the second information indicates to obtain the PC5 key in the control plane manner or the user plane manner, and the eighth indication information is equivalent to the fifth indication information or the first information, the relay UE may determine, depending on whether the second information and the eighth indication information are the same, whether the manners that are separately determined by the remote UE and the relay UE and that are of obtaining the first PC5 key are the same. If the second information and the eighth indication information are the same, the relay UE determines that the manners that are separately determined by the remote UE and the relay UE and that are of obtaining the first PC5 key are the same; or if the second information and the eighth indication information are different, the relay UE determines that the manners that are separately determined by the remote UE and the relay UE and that are of obtaining the first PC5 key are different.

If the second information indicates to obtain the PC5 key in the control plane manner or the user plane manner, and the eighth indication information indicates to obtain the PC5 key in the control plane manner or the user plane manner, the relay UE may determine, based on the second information, the manner of obtaining the PC5 key, and determine, through comparison, whether the manner determined based on the second information and the manner indicated by the eighth indication information are the same. If the PC5 key obtaining manner determined based on the second information and the PC5 key obtaining manner indicated by the eighth indication information are the same, the relay UE determines that the manners that are separately determined by the remote UE and the relay UE and that are of obtaining the first PC5 key are the same; or if the PC5 key obtaining manner determined based on the second information and the PC5 key obtaining manner indicated by the eighth indication information are different, the relay UE determines that the manners that are separately determined by the remote UE and the relay UE and that are of obtaining the first PC5 key are different.

In another example, if the second information includes third mapping relationship, and the eighth indication information is equivalent to the fifth indication information or the first information, the relay UE may determine, depending on whether sixth indication information and the eighth indication information are the same, whether the manners that are separately determined by the remote UE and the relay UE and that are of obtaining the first PC5 key are the same. The sixth indication information indicates to obtain the PC5 key in the control plane manner or the user plane manner, and the sixth indication information is corresponding to the PLMN ID of the home network of the remote UE or the PLMN ID of the home network of the relay UE.

If the second information includes the third mapping relationship, and the eighth indication information indicates to obtain the PC5 key in the control plane manner or the user plane manner, the relay UE may determine, based on the sixth indication information, the manner of obtaining the PC5 key, and determine, through comparison, whether the manner determined based on the sixth indication information and the manner indicated by the eighth indication information are the same. If the PC5 key obtaining manner determined based on the sixth indication information and the PC5 key obtaining manner indicated by the eighth indication information are the same, the relay UE determines that the manners that are separately determined by the remote UE and the relay UE and that are of obtaining the first PC5 key are the same; or if the PC5 key obtaining manner determined based on the sixth indication information and the PC5 key obtaining manner indicated by the eighth indication information are different, the relay UE determines that the manners that are separately determined by the remote UE and the relay UE and that are of obtaining the first PC5 key are different.

In another example, if the second information includes fourth mapping relationship, and the eighth indication information is equivalent to the fifth indication information or the first information, the relay UE may determine, depending on whether sixth indication information and the eighth indication information are the same, whether the manners that are separately determined by the remote UE and the relay UE and that are of obtaining the first PC5 key are the same. The sixth indication information indicates to obtain the PC5 key in the control plane manner or the user plane manner, and the sixth indication information is corresponding to the identifier information of the first relay service.

If the second information includes the fourth mapping relationship, and the eighth indication information indicates to obtain the PC5 key in the control plane manner or the user plane manner, the relay UE may determine, based on the sixth indication information, the manner of obtaining the PC5 key, and determine, through comparison, whether the manner determined based on the sixth indication information and the manner indicated by the eighth indication information are the same. If the PC5 key obtaining manner determined based on the sixth indication information and the PC5 key obtaining manner indicated by the eighth indication information are the same, the relay UE determines that the manners that are separately determined by the remote UE and the relay UE and that are of obtaining the first PC5 key are the same; or if the PC5 key obtaining manner determined based on the sixth indication information and the PC5 key obtaining manner indicated by the seventh indication information are different, the remote UE determines that the manners that are separately determined by the remote UE and the relay UE and that are of obtaining the first PC5 key are different.

In still another example, if the second information includes the third mapping relationship, and the eighth indication information is a PLMN ID, the relay UE determines, based on the eighth indication information and the third mapping relationship, the manner of obtaining the PC5 key, and determines, depending on whether the manner of obtaining the PC5 key and the manner indicated by the sixth indication information are the same, whether the manners of obtaining the first PC5 key that are separately determined by the remote UE and the relay UE are the same. If the manner that is of obtaining the PC5 key and that is determined by the relay UE based on the eighth indication information and the third mapping relationship is the same as the manner that is of obtaining the PC5 key and that is indicated by the sixth indication information, it is determined that the manners obtaining the first PC5 key by the remote UE and the relay UE are the same; otherwise, it is determined that the manners of obtaining the first PC5 key by the remote UE and the relay UE are different. The manner that is of obtaining the PC5 key and that is determined by the relay UE based on the eighth indication information and the third mapping relationship is a manner indicated by indication information corresponding to the eighth indication information in the third mapping relationship.

In yet another example, if the first information includes fourth mapping relationship, and the eighth indication information is the identifier information of the first relay service, the relay UE determines, based on the eighth indication information and the fourth mapping relationship, the manner of obtaining the PC5 key, and determines, depending on whether the manner of obtaining the PC5 key and the manner indicated by the sixth indication information are the same, whether the manners of obtaining the first PC5 key that are separately determined by the relay UE and the remote UE are the same. If the manner that is of obtaining the PC5 key and that is determined by the relay UE based on the eighth indication information and the fourth mapping relationship is the same as the manner that is of obtaining the PC5 key and that is indicated by the sixth indication information, it is determined that the manners obtaining the first PC5 key by the relay UE and the remote UE are the same; otherwise, it is determined that the manners of obtaining the first PC5 key by the relay UE and the remote UE are different. The manner that is of obtaining the PC5 key and that is determined by the relay UE based on the eighth indication information and the second mapping relationship is a manner indicated by indication information corresponding to the eighth indication information in the fourth mapping relationship.

It should be noted that the discovery response message may be a discovery response message in a model B discovery procedure.

Case 2: In the method 1000, S1030b and S1040b are performed.

S1030b: The relay UE sends a discovery announce message to the remote UE.

The discovery announce message may be a discovery announcing message sent by announcing (announcing) UE in a Model A discovery model.

S1040b: The remote UE sends a direct communication request message to the relay UE.

If the remote UE determines, based on the discovery announce message, that the relay UE can provide a first relay service required by the remote UE, the remote UE sends the direct communication request message to the remote UE. The direct communication request message includes eighth indication information, and the eighth indication information indicates, to the relay UE, a manner that is determined by the remote UE and that is of obtaining a first PC5 key. For more descriptions about how the remote UE determines the manner of obtaining the first PC5 key and about the eighth indication information, refer to S 1030a.

It should be noted that, the direct communication message may be a DCR message for initiating a PC5 link.

S1050: The remote UE and the relay UE perform the PC5 link establishment procedure.

If S1030a and S1040a are performed in the method 1000, in S1040a, the relay UE sends the discovery response message to the source UE, and the remote UE and the relay UE perform the PC5 link establishment procedure.

If S 1030b and S1040b are performed in the method 1000, after the relay UE receives the direct communication request message, if the relay UE determines, based on the second information and the eighth indication information, manners that are separately determined by the remote UE and the relay UE and that are of obtaining the first PC5 key are the same, the relay UE and the remote UE perform the PC5 link establishment procedure; or if the relay UE determines the manners that are separately determined by the remote UE and the relay UE and that are of obtaining the first PC5 key are different, the relay UE terminates the PC5 link establishment procedure, or sends a reject message to the remote UE, where the reject message carries cause value information that indicates the manners of obtaining the first PC5 key are different. For how the relay UE determines, based on the second information and the eighth indication information, whether the manners that are separately determined by the remote UE and the relay UE and that are of obtaining the first PC5 key are the same, refer to the descriptions in the foregoing S 1040a.

In this embodiment of this application, the remote UE carries the eighth indication information in the discovery request message or the direct communication request message, so that the relay UE can determine, based on the eighth indication information, whether the manners that are separately determined by the relay UE and the remote UE and that are of obtaining the first PC5 key are the same. When the manners that are separately determined by the relay UE and the remote UE and that are of obtaining the first PC5 key are the same, the relay UE sends the discovery response message to the remote UE, to avoid a PC5 link establishment failure caused by different manners that are determined by the UEs at two ends and that are of obtaining the first PC5 key. When the manners that are separately determined by the relay UE and the remote UE and that are of obtaining the first PC5 key are different, the relay UE does not send the discovery response message to the remote UE, or sends the reject message to the remote UE, to reduce signaling.

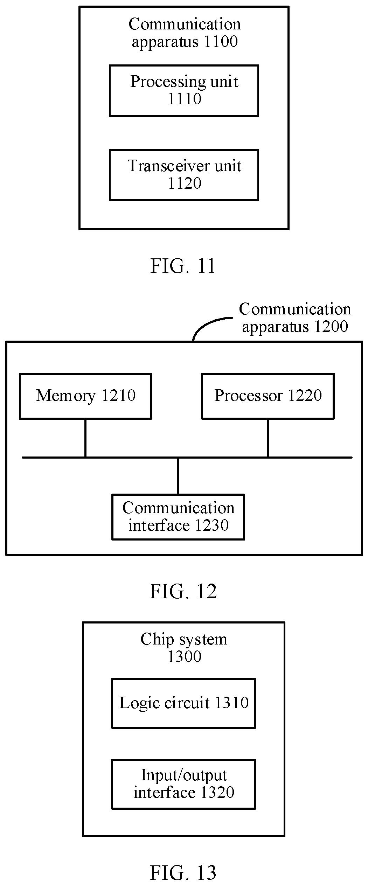

The foregoing describes in detail the methods provided in embodiments of this application with reference to FIG. 3 to FIG. 10. The following describes in detail communication apparatuses provided in embodiments of this application with reference to FIG. 11 and FIG. 13.

FIG. 11 is a schematic block diagram of a communication apparatus according to an embodiment of this application. As shown in FIG. 11, a communication apparatus 1100 may include a processing unit 1110 and a transceiver unit 1120.

In a possible design, the communication apparatus 1100 may correspond to the terminal device in the foregoing method embodiments, for example, may be a terminal device, or may be a component (for example, a chip or a chip system) configured in the terminal device.

It should be understood that the communication apparatus 1100 may correspond to the first terminal device in the method 300 according to embodiments of this application, and the communication apparatus 1100 may include units configured to perform the method performed by the first terminal device in the method 300 in FIG. 3. In addition, units in the communication apparatus 1100 and the foregoing other operations and/or functions are separately used to implement corresponding procedures of the method 300 in FIG. 3. It should be understood that a specific process in which the units perform the foregoing corresponding steps is described in detail in the foregoing method embodiments, and for brevity, details are not described herein.

It should be understood that the communication apparatus 1100 may correspond to the remote UE in the method 400, the method 500, the method 600, the method 700, the method 900, or the method 1000 according to embodiments of this application. The communication apparatus 1100 may include units configured to perform the method performed by the remote UE in the method 400 in FIG. 4, the method 500 in FIG. 5, the method 600 in FIG. 6, the method 700 in FIG. 7, the method 900 in FIG. 9, or the method 1000 in FIG. 10. In addition, the units in the communication apparatus 1100 and the foregoing other operations and/or functions are separately used to implement corresponding procedures in the method 400 in FIG. 4, the method 500 in FIG. 5, the method 600 in FIG. 6, the method 700 in FIG. 7, the method 900 in FIG. 9, or the method 1000 in FIG. 10. It should be understood that a specific process in which the units perform the foregoing corresponding steps is described in detail in the foregoing method embodiments, and for brevity, details are not described herein.

It should be understood that the communication apparatus 1100 may correspond to the relay UE in the method 400, the method 500, the method 600, the method 700, the method 900, or the method 1000 according to embodiments of this application. The communication apparatus 1100 may include units configured to perform the method performed by the relay UE in the method 400 in FIG. 4, the method 500 in FIG. 5, the method 600 in FIG. 6, the method 700 in FIG. 7, the method 900 in FIG. 9, or the method 1000 in FIG. 10. In addition, the units in the communication apparatus 1100 and the foregoing other operations and/or functions are separately used to implement corresponding procedures in the method 400 in FIG. 4, the method 500 in FIG. 5, the method 600 in FIG. 6, the method 700 in FIG. 7, the method 900 in FIG. 9, or the method 1000 in FIG. 10. It should be understood that a specific process in which the units perform the foregoing corresponding steps is described in detail in the foregoing method embodiments, and for brevity, details are not described herein.

It should be understood that the communication apparatus 1100 may correspond to UE #1 in the method 800 according to embodiments of this application, and the communication apparatus 1100 may include units configured to perform the method performed by UE #1 in the method 800 in FIG. 8. In addition, units in the communication apparatus 1100 and the foregoing other operations and/or functions are separately used to implement corresponding procedures of the method 800 in FIG. 8. It should be understood that a specific process in which the units perform the foregoing corresponding steps is described in detail in the foregoing method embodiments, and for brevity, details are not described herein.

It should be further understood that, when the communication apparatus 1100 is a chip configured in a terminal device, the transceiver unit 1120 in the communication apparatus 1100 may be implemented by using an input/output interface, and the processing unit 1110 in the communication apparatus 1100 may be implemented by using the chip, a processor, a microprocessor, an integrated circuit, or the like that are integrated in a chip system.

In another possible design, the communication apparatus 1100 may correspond to the policy control function network element in the foregoing method embodiments, for example, may be a policy control function network element, or may be a component (for example, a chip or a chip system) configured in the policy control function network element.

It should be understood that the communication apparatus 1100 may correspond to the policy control function network element in the method 800 according to embodiments of this application, and the communication apparatus 1100 may include units configured to perform the method performed by the policy control function network element in the method 800 in FIG. 8. In addition, units in the communication apparatus 1100 and the foregoing other operations and/or functions are separately used to implement corresponding procedures of the method 800 in FIG. 8. It should be understood that a specific process in which the units perform the foregoing corresponding steps is described in detail in the foregoing method embodiments, and for brevity, details are not described herein.

It should be further understood that, when the communication apparatus 1100 is a chip configured in a policy control function network element, the transceiver unit 1120 in the communication apparatus 1100 may be implemented by using an input/output interface, and the processing unit 1120 in the communication apparatus 1100 may be implemented by using the chip, a processor, a microprocessor, an integrated circuit, or the like that are integrated in a chip system.

In still another possible design, the communication apparatus 1100 may correspond to the access and mobility management function network element in the foregoing method embodiments, for example, may be an access and mobility management function network element, or may be a component (for example, a chip or a chip system) configured in the access and mobility management function network element.

It should be understood that the communication apparatus 1100 may correspond to the access and mobility management function network element in the method 800 according to embodiments of this application, and the communication apparatus 1100 may include units configured to perform the method performed by the access and mobility management function network element in the method 800 in FIG. 8. In addition, units in the communication apparatus 1100 and the foregoing other operations and/or functions are separately used to implement corresponding procedures of the method 800 in FIG. 8. It should be understood that a specific process in which the units perform the foregoing corresponding steps is described in detail in the foregoing method embodiments, and for brevity, details are not described herein.

It should be further understood that, when the communication apparatus 1100 is a chip configured in an access and mobility management function network element, the transceiver unit 1120 in the communication apparatus 1100 may be implemented by using an input/output interface, and the processing unit 1110 in the communication apparatus 1100 may be implemented by using the chip, a processor, a microprocessor, an integrated circuit, or the like that are integrated in a chip system. FIG. 12 is a schematic block diagram of a wireless communications apparatus according to another embodiment of this application. A communication apparatus 1200 shown in FIG. 12 may include a memory 1210, a processor 1220, and a communication interface 1230. The memory 1210, the processor 1220, and the communication interface 1230 are connected through an internal connection path. The memory 1210 is configured to store instructions. The processor 1220 is configured to execute the instructions stored in the memory 1210, to control an input/output interface to receive/send a packet. Optionally, the memory 1210 may be coupled to the processor 1220 through an interface, or may be integrated with the processor 1220.

It should be noted that the communication interface 1230 uses a transceiver apparatus, for example, but not limited to a transceiver, to implement communication between the communication apparatus 1200 and another device or a communication network. The communication interface 1230 may further include the input/output interface (input/output interface).

In an implementation process, the steps of the foregoing methods may be completed by using a hardware integrated logic circuit in the processor 1220, or by using instructions in a form of software. The method of the communication disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1210, and the processor 1220 reads information in the memory 1210 and completes the steps in the foregoing methods in combination with hardware of the processor 1220. To avoid repetition, details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should also be understood that in embodiments of this application, the memory may include a read-only memory and a random access memory, and provide instructions and data to the processor. A part of the processor may further include a non-volatile random access memory. For example, the processor may further store information of a device type.

FIG. 13 is a schematic diagram of a chip system according to an embodiment of this application. The chip system herein may alternatively be a system including a circuit. A chip system 1300 shown in FIG. 13 includes a logic circuit 1310 and an input/output interface (input/output interface) 1320. The logic circuit is configured to: be coupled to the input interface, and transmit data (for example, the first indication information) by using the input/output interface, to perform the methods described in FIG. 3 to FIG. 10.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is run on a computer, the computer is enabled to perform the method performed by the terminal device, the policy control function network element, or the access and mobility management function network element in the embodiments shown in FIG. 3 to FIG. 10.

According to the methods provided in embodiments of this application, this application further provides a computer-readable storage medium. The computer-readable storage medium stores program code. When the program code is run on a computer, the computer is enabled to perform the method performed by the terminal device, the policy control function network element, or the access and mobility management function network element in the embodiments shown in FIG. 3 to FIG. 10.

According to the methods provided in embodiments of this application, this application further provides a system. The system includes one or more foregoing terminal devices, policy control function network elements, or access and mobility management function network elements.

The terminal devices in the foregoing apparatus embodiments correspond to the terminal devices in the method embodiments; the policy control function network elements in the foregoing apparatus embodiments correspond to the policy control function network elements in the method embodiments; and the access and mobility management function network elements in the foregoing apparatus embodiments correspond to the access and mobility management function network elements in the method embodiments. A corresponding module or unit performs a corresponding step. For example, a transceiver unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or a thread of execution, and the components may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system and/or a distributed system, and/or across a network such as the Internet interacting with other systems by using the signal).

A person of ordinary skill in the art may be aware that, illustrative logical blocks (illustrative logical blocks) and steps (steps) described with reference to the embodiments disclosed in this specification may be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve objectives of the solutions of the embodiments.

In addition, functional units in embodiments of this application may be integrated into one processing unit, or each of the units may exist alone physically, or two or more units are integrated into one unit.

In the foregoing embodiments, all or some of the functions of the function units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedure or functions according to embodiments of this application are all or partially generated.

When the functions are implemented in the form of a software functional unit and sold or used as an independent product, the functions may be stored in a computer-readable storage medium. Based on such an understanding, a part of the technical solutions in this application essentially contributing to the current technology, or some of the technical solutions may be represented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a key obtaining manner, comprising:
when a preset condition is met, sending, by a first terminal device, a first message to a second terminal device, wherein the first message comprises first indication information, the first indication information indicates to obtain a first PC5 key in a control plane manner, and the first PC5 key is a key used for a PC5 link between the first terminal device and the second terminal device; and
receiving, by the first terminal device from the second terminal device, a response message of the first message, wherein the response message indicates whether the second terminal device can obtain the first PC5 key, wherein
the preset condition comprises one or more of the following: a first public land mobile network identifier PLMN ID of a home network of the first terminal device is inconsistent with a second PLMN ID of a home network of the second terminal device, a first relay service code RSC used by the first terminal device in a proximity direct discovery procedure corresponds to a layer-2 terminal device-to-network relay communication service, a second RSC used by the second terminal device in a proximity direct discovery procedure corresponds to the layer-2 terminal device-to-network relay communication service, key information that is obtained by the first terminal device from a key management function network element and that is for determining the first PC5 key expires, and the first terminal device has not obtained the key information.

2. The method according to claim 1, wherein the first terminal device is a remote terminal device, the second terminal device is a relay terminal device, and the preset condition comprises one or more of the following: the first PLMN ID is inconsistent with the second PLMN ID, the first RSC corresponds to the layer-2 terminal device-to-network relay communication service, the second RSC corresponds to the layer-2 terminal device-to-network relay communication service, the key information obtained by the first terminal device from the key management function network element expires, and the first terminal device has not obtained the key information.

3. The method according to claim 1, wherein the first terminal device is a relay terminal device, the second terminal device is a remote terminal device, and the preset condition comprises one or more of the following: the first PLMN ID is inconsistent with the second PLMN ID, the first RSC corresponds to the layer-2 terminal device-to-network relay communication service, and the second RSC corresponds to the layer-2 terminal device-to-network relay communication service.

4. The method according to claim 2 or 3, wherein the method further comprises:
receiving, by the first terminal device, a third message from the second terminal device, wherein the third message comprises the second PLMN ID and the second RSC.

5. The method according to claim 4, wherein the key management function network element corresponds to the first PLMN ID or the second PLMN ID, and that the first terminal device has not obtained the key information comprises: the first terminal device has not obtained the key information from the key management function network element.

6. The method according to any one of claims 1 to 5, wherein the method further comprises:
receiving, by the first terminal device, first information, wherein the first information indicates that the first terminal device can obtain a PC5 key in the control plane manner and a user plane manner.

7. The method according to any one of claims 1 to 5, wherein the method further comprises:
receiving, by the first terminal device, first information, wherein the first information comprises a mapping relationship between the first PLMN ID and second indication information or a mapping relationship between the second PLMN ID and second indication information, and the second indication information indicates to obtain a PC5 key in the control plane manner and a user plane manner.

8. The method according to any one of claims 1 to 5, wherein the method further comprises:
receiving, by the first terminal device, first information, wherein the first information comprises a mapping relationship between identifier information of a relay service corresponding to the PC5 link and second indication information, and the second indication information indicates to obtain a PC5 key in the control plane manner and a user plane manner.

9. The method according to any one of claims 6 to 8, wherein the method further comprises:
the first terminal device determines the first indication information based on the first information.

10. A method for determining a key obtaining manner, comprising:
receiving, by a second terminal device, a first message from a first terminal device, wherein the first message comprises first indication information, the first indication information indicates to obtain a first PC5 key in a control plane manner, and the first PC5 key is a key used for a PC5 link between the first terminal device and the second terminal device; and
sending, by the second terminal device, a response message of the first message sent by the first terminal device, wherein the response message indicates whether the second terminal device can obtain the first PC5 key.

11. The method according to claim 10, wherein
if the second terminal device determines that the first PC5 key can be obtained in the control plane manner, the response message indicates that the second terminal device can obtain the first PC5 key; or
if the second terminal device determines that the first PC5 key cannot be obtained in the control plane manner, the response message indicates that the second terminal device cannot obtain the first PC5 key.

12. The method according to claim 10 or 11, wherein the method further comprises:
receiving, by the second terminal device, second information, wherein the second information indicates that the second terminal device can obtain a PC5 key in the control plane manner and/or a user plane manner.

13. The method according to claim 10 or 11, wherein the method further comprises:
receiving, by the second terminal device, second information, wherein the second information comprises a mapping relationship between a first public land mobile network identifier PLMN ID of a home network of the first terminal device and third indication information or a mapping relationship between a second PLMN ID of a home network of the second terminal device and third indication information, and the third indication information indicates to obtain a PC5 key in the control plane manner and/or a user plane manner.

14. The method according to claim 10 or 11, wherein the method further comprises:
receiving, by the second terminal device, second information, wherein the second information comprises a mapping relationship between identifier information of a relay service corresponding to the PC5 link and third indication information, and the third indication information indicates to obtain a PC5 key in the control plane manner and/or a user plane manner.

15. A communication method, comprising:
receiving, by a policy control function network element from an access and mobility management function network element, a request message for requesting a proximity-based service ProSe parameter of a first terminal device; and
sending, by the policy control function network element, the ProSe parameter to the first terminal device, wherein the ProSe parameter comprises first information, the first information is for determining a manner of obtaining a first PC5 key, the first PC5 key is a key used for a PC5 link between the first terminal device and a second terminal device, and the manner of obtaining the first PC5 key comprises a control plane manner and/or a user plane manner.

16. The method according to claim 15, wherein the first information indicates to obtain a PC5 key in the control plane manner and/or the user plane manner.

17. The method according to claim 15, wherein the first information comprises a mapping relationship between a first public land mobile network identifier PLMN ID of a home network of the first terminal device and second indication information or a mapping relationship between a second PLMN ID of a home network of the second terminal device and second indication information, and the second indication information indicates to obtain a PC5 key in the control plane manner and the user plane manner.

18. The method according to claim 15, wherein the first information comprises a mapping relationship between identifier information of a relay service corresponding to the PC5 link and second indication information, and the second indication information indicates to obtain a PC5 key in the control plane manner and the user plane manner.

19. The method according to any one of claims 15 to 18, wherein the first request message comprises the first information.

20. The method according to any one of claims 15 to 18, wherein the method further comprises:
obtaining, by the policy control function network element, the first information from local configuration.

21. The method according to claim 20, wherein the method further comprises:
receiving, by the policy control function network element, the first information from an application function network element.

22. The method according to any one of claims 15 to 18, wherein the method further comprises:
sending, by the policy control function network element to a first network element, a request message for requesting the first information; and
receiving, by the policy control function network element, the first information from the first network element.

23. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 22.

24. A chip, comprising a processor and a communication interface, wherein the communication interface is configured to: receive data and/or information, and transmit the received data and/or information to the processor, and the processor processes the data and/or information to perform the method according to any one of claims 1 to 22.

25. A computer-readable storage medium, wherein the computer-readable storage medium stores a computer program, and when the computer program is executed, the method according to any one of claims 1 to 22 is performed.

26. A computer program product comprising instructions, wherein when the computer program product runs on a computer, the computer is enabled to perform the method according to any one of claims 1 to 22.

27. A system, comprising a policy control function network element and an access and mobility management function network element, wherein
the mobility management function network element is configured to:
send a request message for requesting a proximity-based service ProSe parameter of a first terminal device; and
the policy control function network element is configured to:
receive the request message; and
send the ProSe parameter to the first terminal device, wherein the ProSe parameter comprises first information, the first information is for determining a manner of obtaining a first PC5 key, the first PC5 key is a key used for a PC5 link between the first terminal device and a second terminal device, and the manner of obtaining the first PC5 key comprises a control plane manner and/or a user plane manner.

28. A system, comprising:
a policy control function network element, configured to perform the method according to any one of claims 15 to 22; and
one or more of the following terminals: a terminal configured to perform steps in the method according to any one of claims 1 to 9, and a terminal configured to perform steps in the method according to claims 10 to 14.
